# EUROPEAN PATENT SPECIFICATION

(11) **EP 0 645 036 B1**
(45) Date of publication and mention of the grant of the patent: **10.05.2000**
(21) Application number: 93915284.9
(22) Date of filing: 10.06.1993
(51) Int. Cl.: G06F 17/27, G06F 17/60

(54) **AN AUTOMATED METHOD FOR CHECKING PATENT APPLICATIONS**
AUTOMATISIERTES VERFAHREN ZUR UEBERPRUEFUNG VON PATENTANMELDUNGEN
PROCEDE AUTOMATISE POUR VERIFIER DES DEMANDES DE BREVET

(30) Priority: 11.06.1992 US 897362
(43) Date of publication of application: 29.03.1995
(73) Proprietor: MOFFA, Emil, Arden Hills, MN 55112 (US)
(72) Inventor: MOFFA, Emil, Arden Hills, MN 55112 (US)
(74) Representative: MacGregor, Gordon
(86) International application number: US9305561
(87) International publication number: WO9325974

(56) References cited:
- EP-A- 0 241 646
- EP-A- 0 287 713
- EP-A- 0 361 820
- US-A- 4 773 009
- Automated Patent System (APS), May 1991, US Department of Commerce, US Patent and Trademark Office, pages i, iii and 27-32.
- Manual of Patent Examining Procedure, Original Fifth Edition, August 1983, Latest Revision October 1989, pages 600-29 to 600-46 and 700-7 to 700-24.

## Description

### FIELD OF THE INVENTION

The present invention relates to the field of composition, and in particular, to an automated method and apparatus for checking compliance of a serial group of words such as a drafted document against a set of word grouping rules such as drafting rules. More particularly, the invention relates to an automated method and apparatus for checking a patent application against the rules for drafting a patent application.

### BACKGROUND OF THE INVENTION

Legal documents, as, for example, patent applications have long been drafted and corrected by attorneys through a process of drafting, reading and revising. Patent applications in particular are drafted in accordance with specific drafting rules following the patent statutes and the Manual of Patent Examining Procedure (MPEP). Such drafting rules include rules for reference characters for elements wherein like elements have like reference characters, rules requiring antecedent basis for claim elements and other drafting rules.

Prior to the automated method provided by the instant invention, the only way to check documents against these drafting rules has been by reading and revising the patent with the reader keeping the rules and the patent under draft in mind while reviewing the patent and indicating changes.

It is, therefore, the motive of the invention to provide an automated method of checking a patent application. **This application was checked with the method of the invention.**

EP-0287713 discloses an automated method for checking for correct and consistent use of expressions forming units of measure in a text processing system by reference to a stored dictionary of allowable expressions.

### SUMMARY OF THE INVENTION

An automated method for checking a document comprised of a serial group of characters is provided. The method of Claim 1 comprises the steps of identifying subgroups of serial characters which relate to each other from within the serial group of characters, and checking the subgroups for consistency of relation with regard to structural rules.

In one aspect of the invention, the method includes the steps of allocating a unique location for each occurrence of each of a plurality of reference characters and then selecting each reference character in turn and finding at least a first preceding word for each occurrence of each selected reference character. Then the at least first preceding word is identified as an element of the selected reference character. The steps of selecting reference characters and identifying elements are repeated until all occurrences of all reference characters have been found. Then each reference character is selected in turn and all associated identified elements are counted for each selected reference character. All identified elements are compared against each other for each selected reference character. If an inconsistency is found among the elements for a selected reference character an error message is generated.

In another aspect of the invention the method includes the steps of finding parts of the patent application, including the background, field of art, summary, abstract, description of the drawings, description of the preferred embodiment and claims. If a claim section is found the method counts the number of claims and analyses them for proper dependency. The method also uses the recited hierarchical relationships to build a claim structure that is used to check the claims for antecedent basis. Antecedent basis is checked for within each claim, and within claims depending from other claims. Elements needing antecedent basis are isolated then checked against recited potential antecedents appearing in the proper order. Claim elements lacking antecedents are reported to the user.

The user can control the level of verbosity and amount of error reporting for each error type. The output of the analysis is available to the user in ASCII format, in an interactive query format, and is available for further processing in binary or ASCII.

Other objects, features and advantages of the invention will be apparent through the Description of the Preferred Embodiment, Claims and Drawings herein wherein like character refer to like elements.

### BRIEF DESCRIPTION OF THE DRAWINGS

Figure 1 is a simplified block diagram generally showing the main components of the automated method and apparatus of the invention for checking a document against a preselected set of drafting regulations.
Figures 2A and 2B are intended to be read together as a process flow diagram of one embodiment of the automated method of the invention for checking a document against a set of drafting rules.
Figures 3A and 3B are intended to be read together as a process flow diagram of one embodiment of the invention for building word strings from a document file.
Figure 4 is a process flow diagram illustrating one example as provided by the automated method and apparatus of the invention for checking reference characters against words in a document.
Figure 5 shows a word structure as employed in one embodiment of the invention.
Figure 6 shows a reference character structure as employed in one embodiment of the invention.
Figure 7 shows a process flow diagram of one method of automatically reading a patent document as employed in one embodiment of the invention.
Figure 8 is a process flow diagram of an automated method of reading the claims section of a patent document for identifying claimed elements.
Figure 9 shows a process flow diagram for finding all the claims of a patent specification.
Figure 10 shows a process flow diagram of the method of the invention to determine claim dependencies.
Figure 11 shows the method of the invention used to check the consistency of the references to drawings in the brief description of the drawings section with the remainder of the patent specification.
Figure 12 shows the method of the invention used to read in claim words.
Figure 13 shows the method of the invention used to assign claim word status.
Figure 14 shows the method of the invention used to read in trigger words.
Figure 15 shows the method of the invention to find claim elements.

### DESCRIPTION OF THE PREFERRED EMBODIMENT

For the purposes of explaining the invention herein, the following terms shall have the following meanings herein unless otherwise indicated by the context in which they are used.

| TERMS | DEFINITION |
|---|---|
| ANTECEDENT | The first recitation of a claim element within a claim or series of claims. An antecedent is comprised of a word string which has a first and last word. |
| WORD | Any string of characters in a document which represents a word in a selected language. |
| WORD STRING | A set of consecutive words. |
| CHARACTER STRING | A set of consecutive characters. |
| ELEMENT | A word or word string referring to a particular illustrated feature in a patent document. |
| REFERENCE CHARACTER | A designator which identifies an element in a patent document. |
| CLAIM ELEMENT | A word string within a claim which represents a claimed feature, function, step, part, member or other basic structure. |
| CLAIM WORDS | Words or symbols predefined as delimiters when used in a patent claim. See examples listed hereinbelow. |

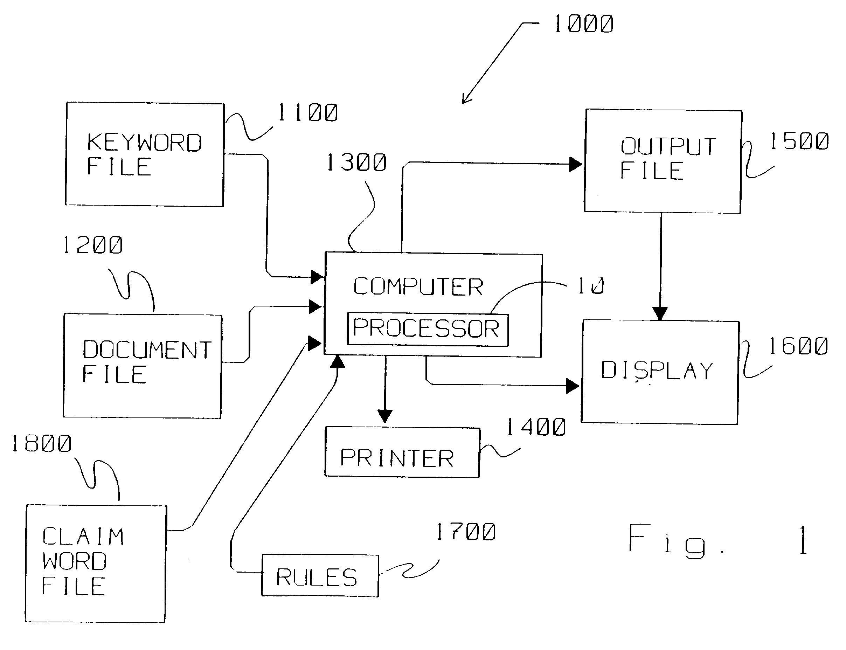

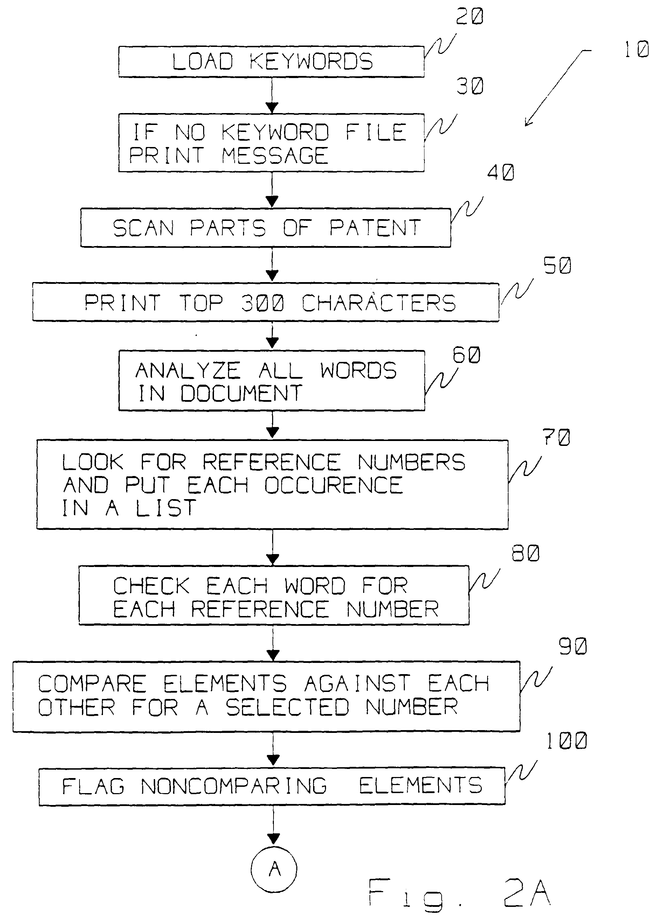

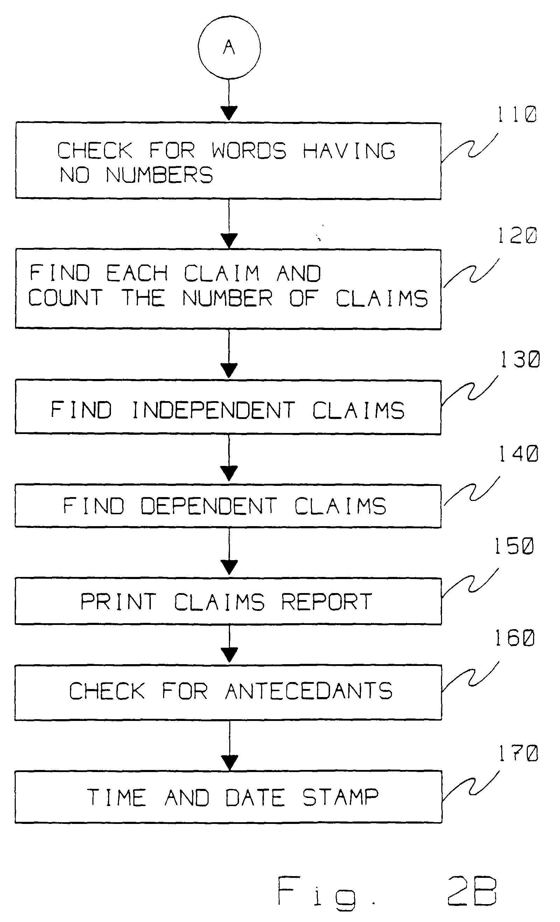

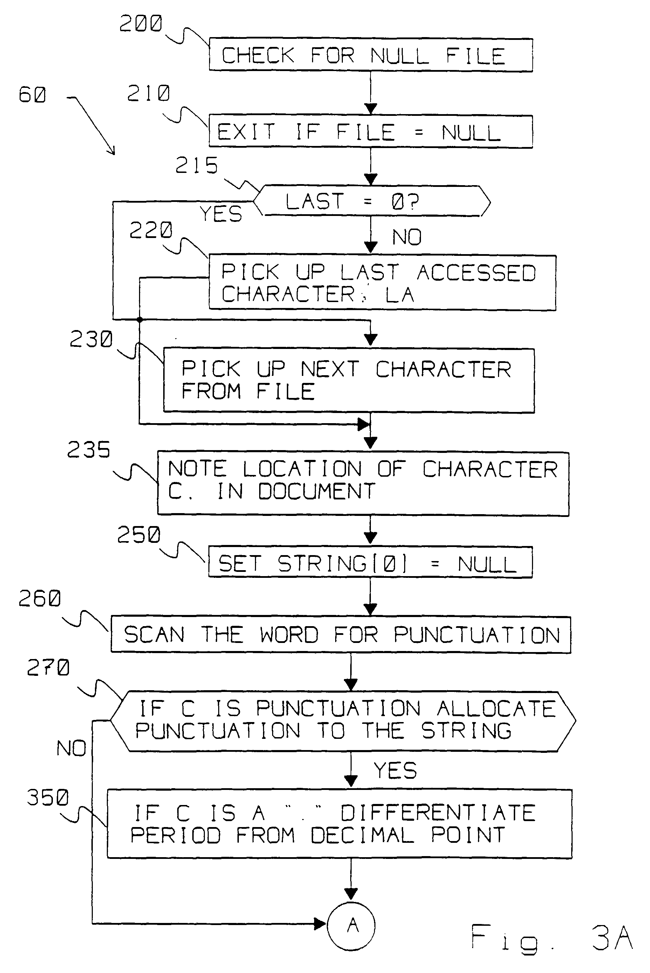

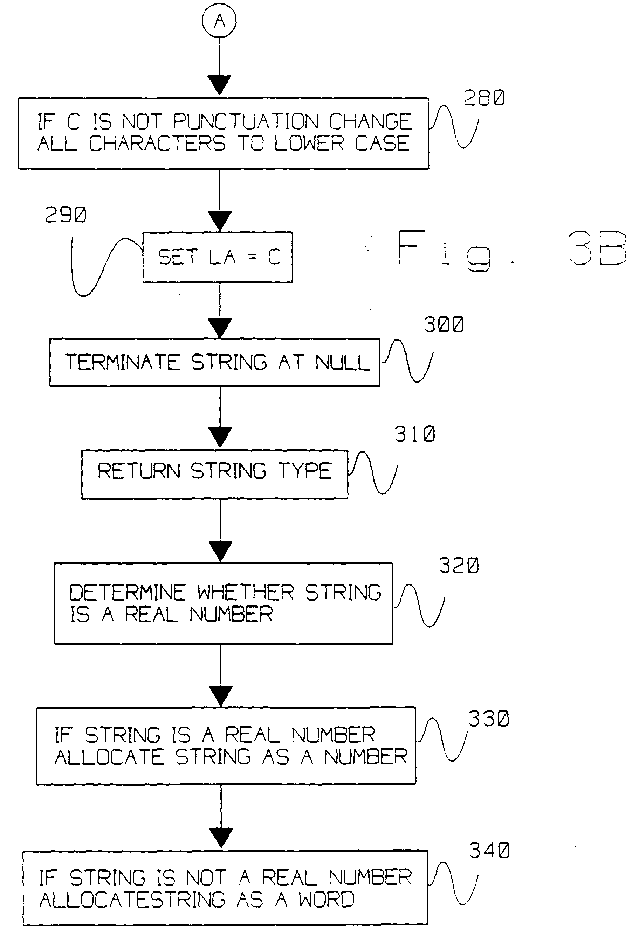

Referring now to Figure 1 which shows a block diagram conceptually showing the main components of a system for checking a document against a preselected set of drafting regulations. The system 1000 includes a keyword file 1100, a document file 1200, and rules file 1700. The keyword file 1100, document file 1200 and rules file 1700 are accessed by a computer 1300 which includes a processor 10 wherein the processor 10 operates on the rules, documents and key words to check the document against the rules from the rules file 1700. The operations of processor 10 are explained in detail hereinbelow.

When the document file 1200 has been processed by processor 10 an output file 1500 and a claim word file 1800 may be created by the computer. The computer 1300 may also display information on a display device 1600 or print information on another output device such as printer 1400. The contents of the various files are described in more detail hereinbelow. The computer 1300 may, advantageously be any of a wide variety of commercially available computers such as a personal computer based upon an INTEL 386 or 486 microprocessor chip. The display device 1600 and printer 1400 may be any commercially available printer or display suitable for use with a personal computer. The rules file 1700 is optional and may be supplanted by a computer program within the processor 10.

Generally, in a law office setting patent specifications are available as word processing documents prepared by word processing programs. These programs have the ability to generate an ASCII file of the patent specification or a binary file of the patent specification. The patent specification can be analyzed with the method and apparatus of the invention in either form. Mistakes found in the patent specification may be directly corrected by overwriting or inserting the automatically detected errors. This correction is done by modifying the document file and replacing certain elements of the document file. For example, if a recited element has an associated drawing number and it is used in the specification without that drawing number, the drawing number can be supplied. The supplied drawing number is written directly to the document file 1200. Once modified by the method and apparatus of the invention the document file can then be reprocessed to verify that the modification was correct.

The method and apparatus of the invention used to automate the checking of a serial group of words against word grouping rules reads the serial group of words and constructs a logical structure that enables the analysis of consistency assertions. These consistency assertions are within the scope of the serial groups of words themselves, these words are used to generate a list of elements that have relationships to each other that are consistently used throughout the serial group of words. Thus the serial group of words themselves provide the context in which the document is analyzed. The keyword file 1100 and claim word file 1800 provide a way of establishing the parameters of the document that override the self consistency requirements of the serial group of words. Certain words have specific meanings in the field of patent law. These meanings override the use of these words within the document's self consistency. Those skilled in the art will recognize that other fields such as drafting of contracts, or licenses follow similar self consistency restrictions in that terms and objects referenced in those documents need to be self consistent in their use.

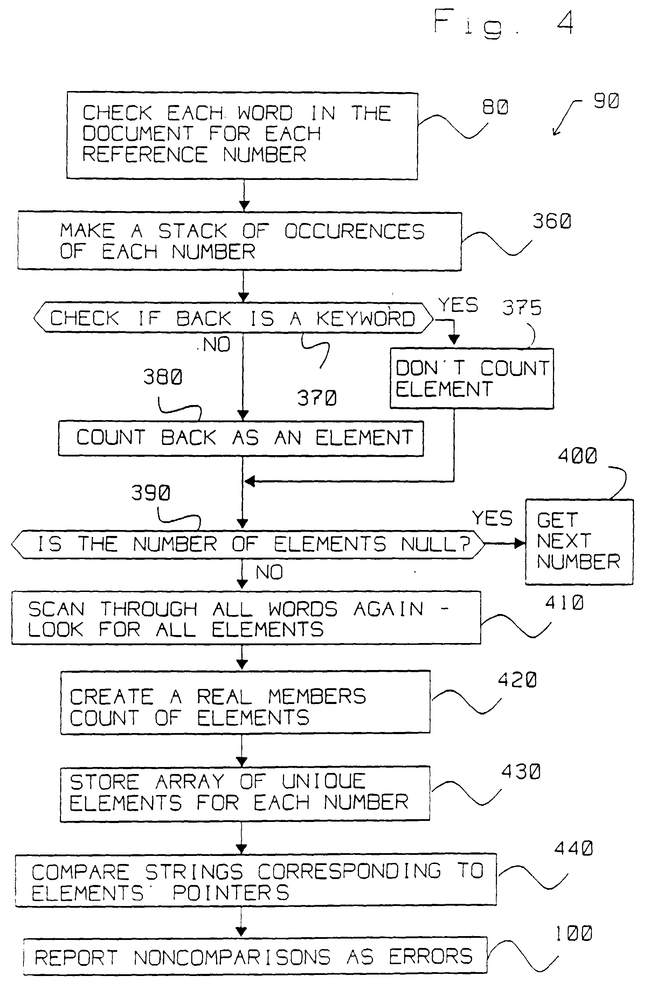

Figures 2A and 2B may be read pieced together to show one illustrative example of the invention as used in the specific application of automatically checking a patent application or patent document against drafting rules and other legal requirements. Those skilled in the art will recognize that, while the invention will be explained in terms of automatically checking a patent document, it is not so limited and other applications of the invention for checking other types of documents will come within the scope of the claims herein.

Referring now in particular to Figure 2A, the first process step after initiating the process of the invention is to load keywords 20 from the keyword file 1100. Keywords are designated in the keyword file 1100 and are defined as common words which occur frequently in proximity to numbers. This is done to avoid confusion with reference characters used to designate steps or elements of a process or apparatus. A partial table of some examples of keywords is shown below in Table 1. Each keyword is followed by a pointing character "n" or "b".

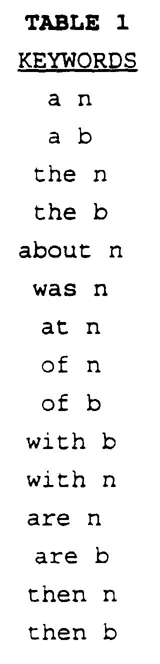

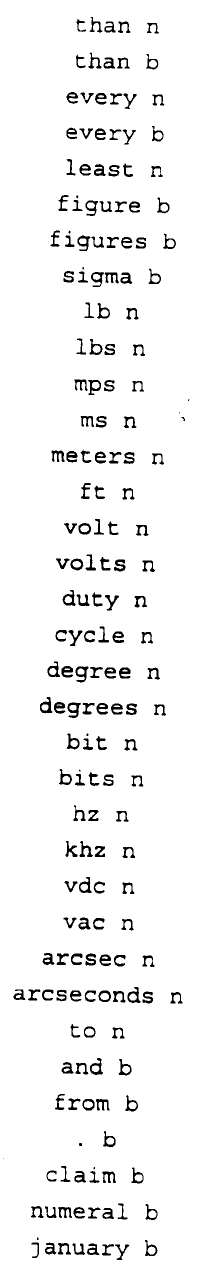

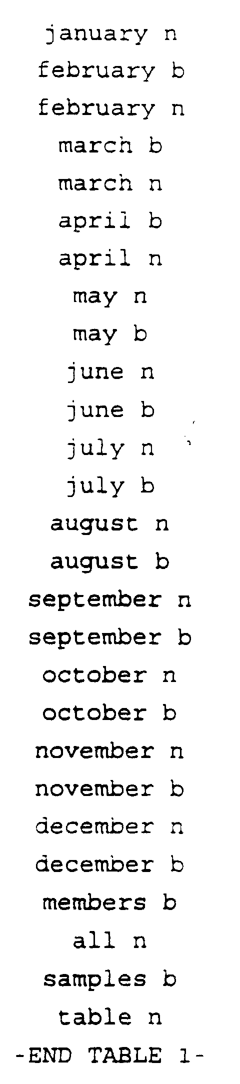

In the keyword file 1100 listed above the character "n" following a keyword stands for "next" and indicates that a number may follow the selected keyword. The character "b" following a keyword stands for "back" and indicates that a number may precede the selected keyword. By recognizing keywords and the "n" and "b" pointing characters the process of the invention recognizes numbers such as dates and measurements and can differentiate such keyword associated numbers from reference characters.

In an alternate embodiment of the invention the keyword file can be encoded in a binary fashion with a three state delimiter either indicating that the number follows the word, the number precedes the word or the number can follow or precede the word. Those skilled in the art having the benefit of this disclosure will also recognize that different keyword files may be used depending on the type of art being disclosed in the patent specification. The user may provide keywords that can be used for a specific patent application to adjust the sensitivity of the automatic method and apparatus of the invention. The apparatus of the invention can learn keywords as more and more patent applications are examined by receiving feedback from the user of the invention as to whether or not the subject word causing an indicated error is indeed a keyword.

If no keyword file 1100 is used, a message to that effect may optionally be printed or displayed by the apparatus of the invention at process step 30. A default set of keywords may be used if desired. A keyword file 1100 is optional at the discretion of the user.

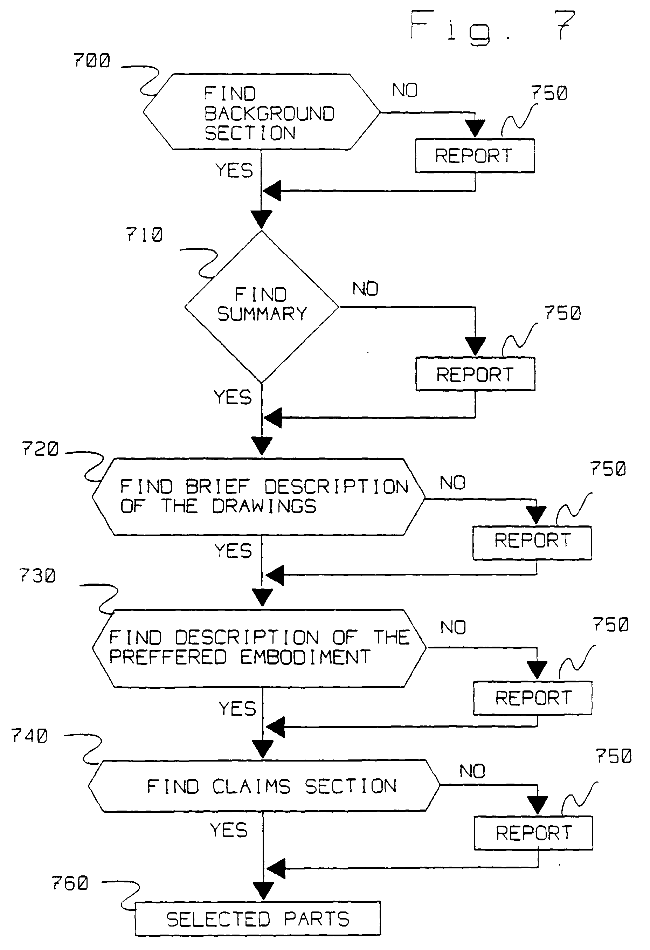

In one embodiment of the invention, the next process step 40 reads the parts of the patent document. Process step 40 is explained in detail below with reference to Figure 7. After the patent has been read the process moves to the next process step 50 wherein a predetermined number of characters is printed from the document which was read in step 40. In the case of a patent document, for example, a paragraph or two of descriptive text may be printed to aid the reader in understanding a report which is generated by the process and apparatus of the invention. After reading and, optionally printing a portion of the patent document in step 50, the process moves to process step 60 wherein all words in the document are analyzed as to their intrinsic type.

Process step 60 may also include an optional tokenization of the words. Tokenization is an optional step which may be employed to achieve compiling speed and a degree of data compression using a hashing scheme. As part of the tokenization step, for example, the document words may each be assigned a hash code in accordance with well known techniques for optimizing computer programs.

In the next process step 70 the apparatus and method of the invention reads the document for reference characters and puts each occurrence of a reference character in a list. The method and apparatus of the invention proceeds to process step 80 wherein each word is checked against each reference character found in step 70. Next at process step 90 elements associated with each reference character are compared against each other for each reference character in turn. Elements associated with a selected reference character which do not match other elements associated with the same selected reference character are flagged as errors for each reference character in step 100.

Optionally, the method of the invention may check for words matching element word strings which have no associated reference character at step 110. Elements missing reference characters may be reported as errors. The process then passes to step 120 wherein, in another optional subprocess, the process of the invention uses information from process step 40 to isolate the claims portion of the patent document and counts the number of claims. Once the number of claims have been counted the process moves to step 130 wherein the number of independent claims is identified and counted and then on to step 140 wherein the number of dependant claims are identified and counted. As part of process step 140 the root independent claims and any dependent claims from which other dependant claims depend in a chain-like fashion are also identified. A claims report may advantageously be printed at process step 150. At process step 160 the claims portion is checked for antecedents. The time and date are stamped on any output at process step 170.

Once the errors in the document have been detected the user is notified. In one embodiment of the invention only the first error of a mislabeled element is reported to the user. In an alternate embodiment of the invention all errors in all instances of usage are reported to the user. The user can select the level of verbosity of the resulting output. As indicated earlier the user can also request that the system automatically correct the specification by, for example, supplying the correct reference character in place of the incorrect reference character.

In one embodiment of the invention a predetermined list of reference characters and elements used in the document is generated. Any inconsistency from the generated list is reported to the user. The generated list of reference characters and elements may be keyed to the patent drawings to reference like elements with like reference characters.

Those skilled in the art will recognize that the data structures used for the preferred embodiment exploit the features of the "C" language. Other languages may be used to implement the method and apparatus of the invention including object oriented languages such as "C++".

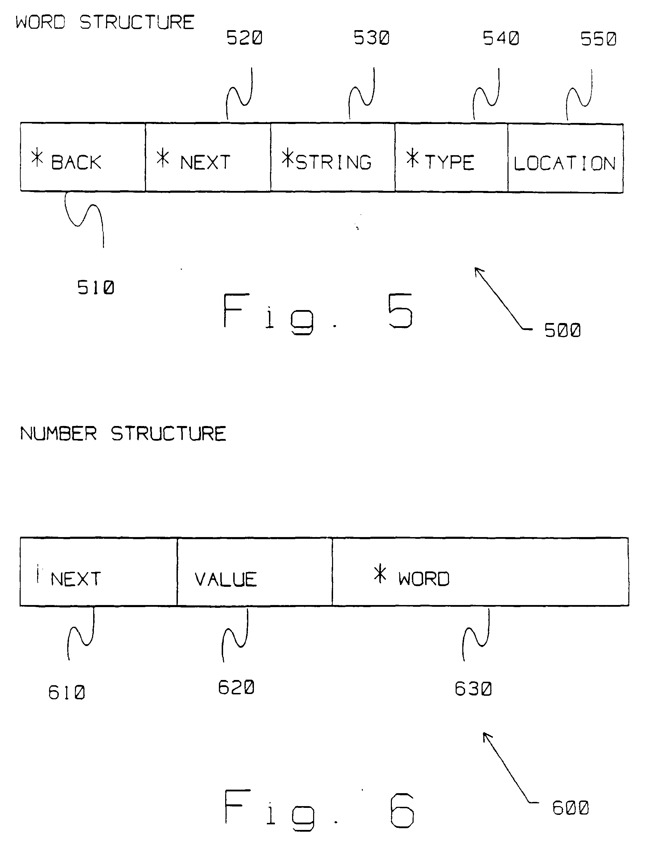

Referring now to Figure 5, a word structure 500 as employed in one embodiment of the invention is shown. The word structure 500 includes pointers to addresses of selected words in the documents. Those skilled in the art will understand that the invention is not limited to such a structure but that, in some applications, data may be substituted for address pointers. In the example shown in Figure 5, the word structure 500 comprises the fields *BACK 510, *NEXT 520, *STRING 530, *TYPE 540 and LOCATION 550. The example shown is taken from an embodiment of the invention implemented in the C programming language. Therefore, the parameters preceded by an asterisk such as *BACK are pointers for that type, where type here is being used according to the definition of a type in the C programming language. For each word in the document therefore, a word structure is created including *BACK which points to the word preceding, as in looking back, from the current word or reference character. The parameter *NEXT points to the next word or other character string following the current word being processed. The parameter *STRING represents a pointer to a storage location for a document element. A character string is usually a word in the document but may also be a numeral, punctuation, a keyword, or a reference character. Once the processor 10 has processed a word string it creates a pointer called *TYPE. *TYPE is a pointer to corresponding data designating that the string pointed to by ^{*}STRING is a document element type, as for example, a keyword, number, reference character or word. The processor 10 builds each string one character at a time, as described herein checking each character to determine whether it is a letter, punctuation mark, null character, space, carriage return or letter. Those skilled in the art will appreciate chat other compiling methods may be used such as a stack oriented approach.

Referring now to Figure 6, a reference character structure 600 as employed in one embodiment of the invention is shown. The reference character structure 600 is comprised of the following elements: *NEXT 610 is a pointer to the next element of the reference character structure thus creating a linked list of reference numbers; VALUE 620 is an integer representing the numerical value of the reference character; and *WORD 630 is a pointer to the location of the reference character within the document. Since the document is represented as a linked list of words, this pointer also points to the word representation of the character. Thus the word "ten" would have a value of 10. In an alternate embodiment of the invention *WORD may point to the word before or after the number.

As in the case of words, reference characters are built on a character by character basis by examining a character as it is processed, herein conveniently referred to as "C", as detailed herein.

Referring now to Figures 3A and 3B a flow diagram for a process and apparatus of accessing words from a document is shown. This relates to step 60 in the flow diagram of Figures 2A and 2B. Initially at step 200, the process checks for the presence of the document file to be processed. The process exits at step 210 if the file is not available, or if the file is a null file. If the file can be accessed the process designates the last accessed character, "LAST" as NULL or equivalently zero. At step 215 a determination is made as to whether or not the last accessed character, LAST, is equal to zero. If "LAST" is not zero the process branches to step 220. Under the convention used in this example, if LAST = 0, then the next character is fetched from the file as character "C" at step 230. If LAST is not zero, then the next character to be processed, "C", is set equal to LAST at step 220. The last accessed character from the previous pass through the process starts the next character string to be processed if the last accessed character has not been consumed. LAST is reset to zero for the next pass through the process if the last accessed character has been consumed. At step 235 the location of "C" is noted with respect to its position in the document.

The process then proceeds to step 250 where an array called "STRING" is set to null in its first indexed position STRING[0] in this example. The rest of process 250 as explained below then proceeds to fill the STRING[index] array character by character by operating on the currently selected character, "C". The process flows to step 260 wherein the word being built is read for punctuation. If the current character "C" at 270 is determined to be punctuation then the STRING[index] is allocated as punctuation using the designator "P" and the process routes to step 350 where the special case of "C" being a period is considered wherein a period is differentiated from a decimal point. If the current character "C" is not punctuation then the program at process step 280 changes the character "C" to lower case if it is an upper case letter. This step can be omitted if case sensitivity is desired. The process then flows to step 290 where the last access character is set equal to the current character in order to preserve the last character. Step 290 may be avoided if other well-known storage means are employed to preserve the last character. At step 300 the string array is terminated when a NULL character is encountered. The string is returned as a word and not a reference character if the first element of the string is not a number character between 0-9. Until a null character is fetched, the process continues to cycle through steps 215 through 300 reading the document.

At step 320 the current STRING[index] array is checked character by character to verify whether it is a reference character as opposed to, for example a number indicating a quantity or other value. The process then flows to step 330 wherein if the string is not a reference character the string is allocated as a word. If, however, the first character of the string is a number character between 0-9, the string is allocated as a reference character at step 340.

Now referring to Figure 4, a detailed flow diagram is shown for process steps 80 and 90 wherein elements are checked for proper association with their reference character. As indicated above, at step 80 the process checks each word in the document against each element of the document that have an associated reference character. In one alternate embodiment of the invention the document words are not stored in random access memory but are maintained as an analytical structure on a mass storage unit. This enables the analysis of documents that may not fit into available random access memory. On systems with virtual memory support this is less of a problem.

Prior to checking, the document is spell-checked to avoid spelling errors. In an alternate embodiment of the invention the comparison of document elements would also consider aliases, abbreviations and similar words. Thus in one field of art "process step 122" may be considered equivalent to "process block 122" obviating the need to alert the user to the harmlessly inconsistent usage. Likewise "jet plane" could be shortened to "jet" without causing an error, etc.

The process then flows to step 360 wherein a stack of occurrences of each reference character is built. Next at step 370 the method and apparatus of the invention checks the character string preceding the numeral, "BACK", against the keyword table. If "BACK" is the equivalent of a keyword the process branches to step 375 wherein the "BACK" word is not counted as an element. If the "BACK" character string is not a keyword the process flows to step 380 wherein the "BACK" word is counted as an element. At process step 390 the number of elements is compared against the Null set. If the number of elements is Null the reference character will be reported to the calling process as having no elements and the next reference character will be obtained at process step 400 returning the process flow to step 80. If the number of elements is not the Null set, this indicates that there are other elements in the set of elements defined by a particular reference character. The process then reads through all words in the document looking for all elements at step 410. The process then flows to step 420 wherein it creates a count of elements for each reference character. The process then flows to process step 430 wherein an array of elements is dynamically allocated for each reference character. At process step 440 the words in the document corresponding to each elements' pointers are compared. For each reference character as determined at process step 320, the set of elements are compared against each other. Each occurrence of non-identical elements for a selected identical numeral results in a non-comparing element. All "non-comparing" elements are reported as errors for the selected reference character.

As stated above, the sensitivity of comparison may be modified by taking into account the use of an alias, an abbreviation, or equivalent words predefined by the user.

Referring now to Figure 7 a more detailed flow diagram of the method of reading the parts of a patent document is shown. The steps include finding a background section 700, finding a summary 710, finding a brief description of the drawings 720, finding a description of the preferred embodiment 730, and finding a claims section 740. If any of the sections are missing a report is generated at step 750 announcing that the particular section has not been found. If all of the sections are found and, optionally, if at least one of the pertinent sections is found selected parts of the patent document are printed at step 760. The processor 10 finds each section by finding word strings which match predefined section headers. These section headers may include for example, "BACKGROUND OF THE INVENTION", "SUMMARY OF THE INVENTION", "BRIEF DESCRIPTION OF THE DRAWINGS", "DESCRIPTION OF THE PREFERRED EMBODIMENT", and "I CLAIM". If word strings within the patent document are not found to match the predefined headers, a report is generated stating that the particular section has not been found. For each section found, a pointer is reserved to locate the section if needed by the processor 10 for further processing. For example, the pointer at which the claims start is reserved for use later on in locating the claims section when it is necessary to check the claims.

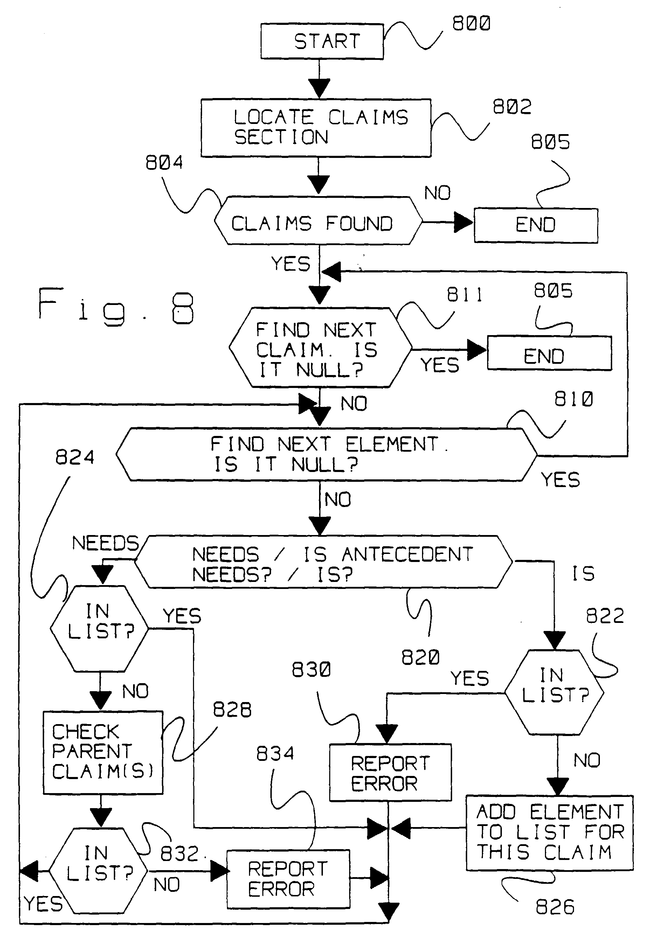

Referring now to Figure 8, a flow diagram of one example of a method for identifying claimed elements in a patent is disclosed. At process step 800 the method starts. In process step 802 the processor searches for the claims section from the other parts of the patent previously identified as described hereinabove with reference to Figure 7. Once the claims section has been located, as by a pointer or other indexing means well known in the art, the process proceeds to step 804. Optionally, the location of the first claim may be obtained absent the inclusion of the words "I claim" or the like by searching for claim like language, the method of which is disclosed below.

At process step 804 the claim section is either found or it is not found. If the claims section is not found the process ends at step 805. If the claims section is found the process advances to step 811 to find the next claim. If a next claim is found the process advances to step 810. If a next claim is not found then the process ends at step 805. In step 810 the antecedent method of the invention finds the next claim element. If there are no more claim elements the process returns to step 811. If there is a claim element the process advances to step 820 to check if the claim element is a claim antecedent or needs a claim antecedent. If the claim element is a potential antecedent the process flows to process step 822. If the claim element needs an antecedent basis the process flows to process step 824. In process step 822 the antecedent is checked as to whether it is already in the antecedent list for this claim or parent claims. If the antecedent is already in the list the process advances to process step 830 to report this error. If the antecedent is not in the list the process advances to process step 826 to add this antecedent to the list of antecedents for this claim.

In process step 824 the claim element is compared to the antecedents already assembled for that claim. If an antecedent is found in the list of antecedents for that claim the process returns to step 810 to check the next claim element. If an antecedent is not found in the list of antecedents the parent claim antecedents are check hierarchically in step 828. If in step 832 an antecedent is found in the list of antecedents for that claim's parents the process returns to step 810 to check the next claim element. If an antecedent is not found in the list of antecedents the error is reported in process step 834 and the process returns to step 810 to check the next claim element.

In one embodiment of the invention a linked list is used to store the antecedent claim structure to permit dynamic memory allocation and deallocation of the antecedent claim structure.

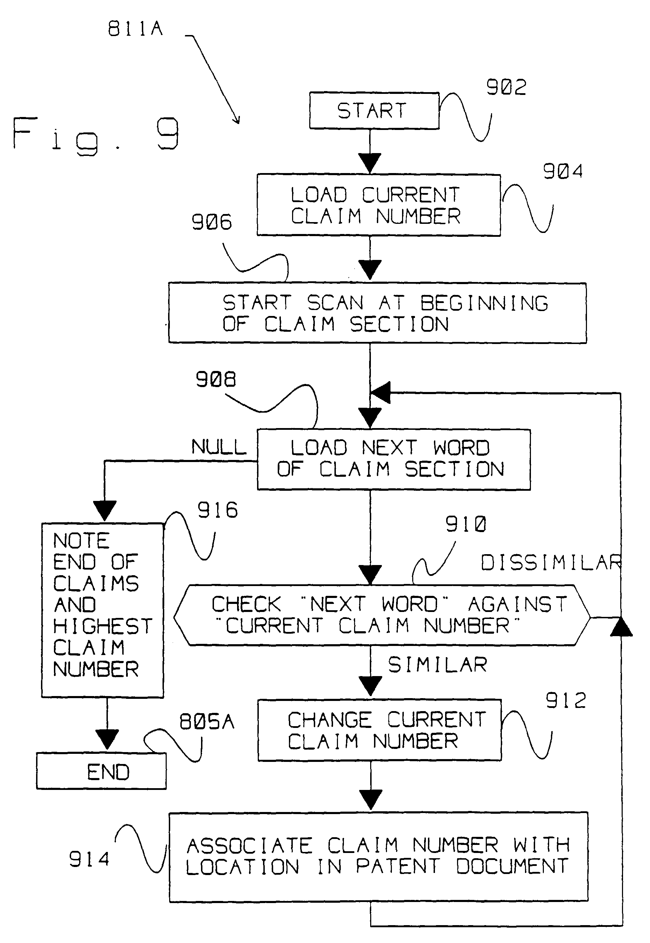

Now referring to Figure 9 which shows a method of finding all the claims in a patent document. The method of Figure 9 is generally associated with process block 811 in Figure 8. The method is an alternate method which could be used to first find all the claims then check their antecedents. The method of Figure 8 finds each claim and after the claim is found the antecedents are checked immediately. The method of finding all claims 811A starts in process block 902. The process flows to block 904 to load the current claim number which, in one embodiment of the invention is claim 1. The process flows to process step 906 to start scanning at the beginning of the claims section which was found at process block 802 in Figure 8. The claims section was found with the method of Figure 7. The process of Figure 9 then flows to process block 908 to load the next word of the claims section. If the next word of the claims section is null the process flows to process block 916 to note where the end of the claims were and the highest claim number. The process then flows to step 805A. If in process step 908 the loading of the next word of the claims section is not null the process flows to block 910. In process step 910 the next word is checked against the current claim number. This is a check where the words are interpreted to be numbers. If the word has an associated number significance and the numbers are identical to the current claim number in this example "1", the process flows to process block 912. At process block 912 the method changes the current claim number to "2". If, in process check step 910, the words are not the current claim number, or the word is not similar to the next word, the process flows back to step 908 to load the next word of the claim section. In process step 914 the claim number is associated with its location in the patent document. This is to allow the processing of antecedents in a hierarchical fashion. By noting an association between the start of a claim and the location in the patent document antecedents can be checked.

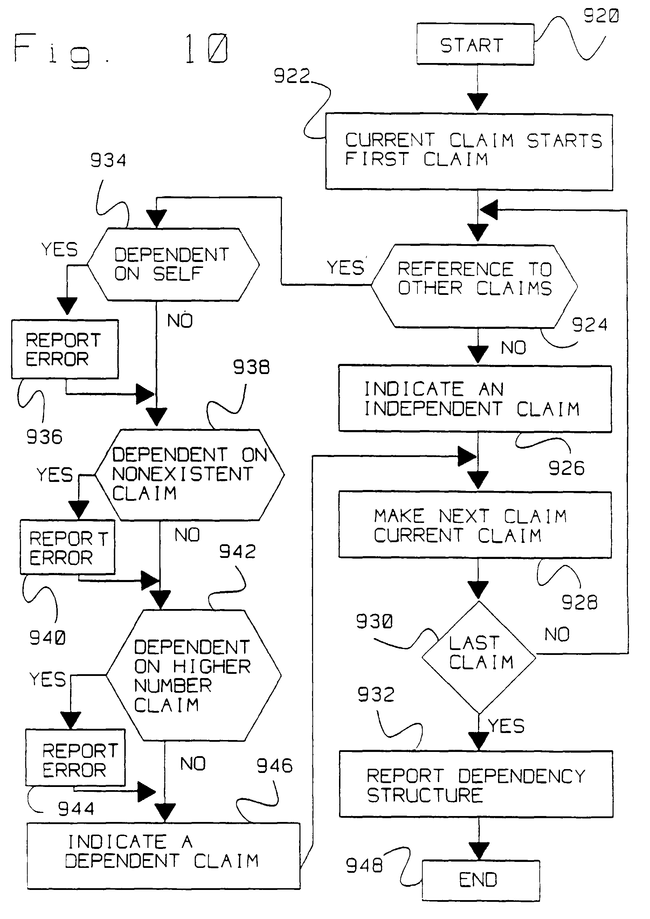

Referring now to Figure 10 which shows a method of determining the dependencies of a claim structure in a patent. The process starts at step 920 and flows to step 922 where the current claim is set to be the first claim to be checked. In one embodiment or the invention the first claim is claim 1. The process flows to step 924 to check whether or not the claim references a claim within it. In one alternative embodiment of the invention the process reads each word in the claim, the words in each claim being defined as bounded between the current claim and the start of the next claim. These positions are determined by the method of Figure 9. If the claim does not reference a claim within it as indicated by either a specific reference to a single claim or a specific reference to a number of claims indicated by the word "claim" or "claims" within the claim the process flows to step 926 to indicate an independent claim. If there is a reference to a claim then the claim number is first determined as the numerical equivalent of the word after the word "claim" or "claims". The process flows to step 934 to determine whether or not the referenced claim that it depends on is indeed itself. If it is then an error is reported in step 936 to indicate that the claim depends on itself. If the claim is not dependent on itself the process flows to step 938 to check whether or not the claim depends on a non-existent claim. If the claim does depend on a non-existent claim then the error is reported in 940. The process then flows to step 942 to determine whether the claim depends on a higher claim number. If it does the process flows to step 934 to report this error. The process flows to step 946 to indicate that the claim is a dependent claim. The process flows then to step 928 to make the next claim the current claim. The process flows to 930 to check whether this claim is the last claim. If it is not the last claim the process flows to step 924 to check whether or not the current claim makes a reference to a claim as described above. If it is the last claim the process flows to 932 to report the dependency structure and, in one alternate embodiment of the invention, create a claim dependency structure that associates every claim with the claim or claims that it depends on. The process then ends at step 948.

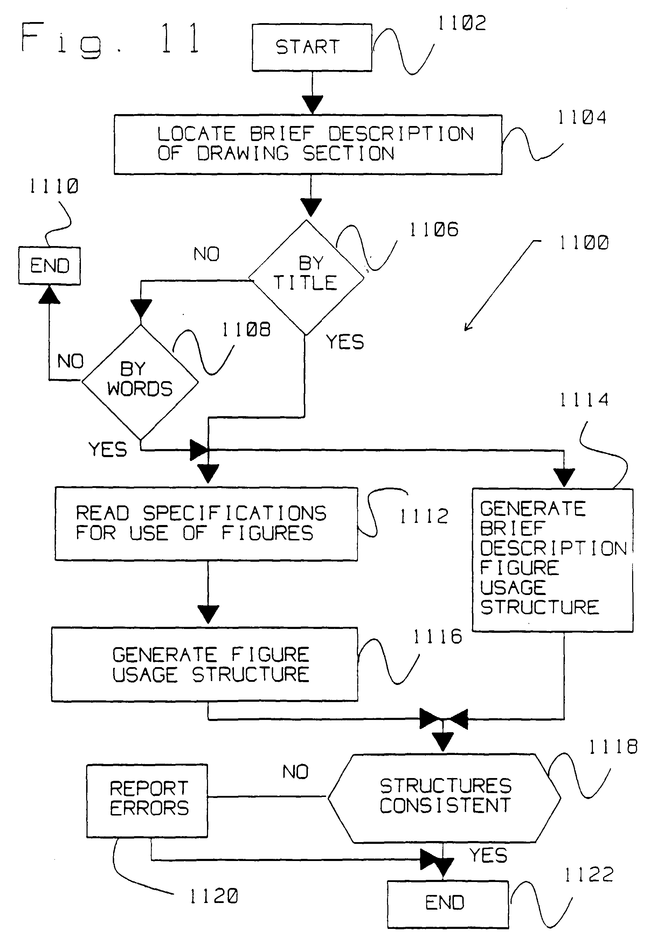

Now referring to Figure 11 which shows the method and apparatus of the invention used to check the consistency of the drawings within the patent specification. The method of the invention begins at process step 1102 by starting the drawing checking process. In process block 1104 a brief description of the drawing section is located. First, the process attempts to locate the brief description of the drawings specifically by title in section 1106 following the method of the invention described above with reference to Figure 7. If the title is found the process flows to process block 1112 where the specification is read. If the brief description of the drawings section is not found by title then the process flows to process block 1108 to determine the drawing section by the descriptive words of the patent. If by descriptive words the brief description of the drawing section is not found the process ends at process step 1110 in an error report stating, for example, that the brief description of the drawing section has not been found. If in either process case 1108 or 1106 the brief description of the drawing section is found the process flows to process blocks 1112 and 1114.

In process step 1114 the method of the invention generates a figure usage structure for the figures described in the brief description of the drawings. The process checks whether the figures are numbered sequentially and whether they have an associated description. After generating a figure structure for each figure and storing the structure in a linked list of figures for the brief description of the drawing the process flows to step 1118 to check whether the figures are consistent with the figures from the specification. In process step 1112 the specification is read for the use of figures following the methods described above. For each figure encountered a figure structure is generated in process step 1116. The usage of each figure is put into a link list. The process flows to step 1118 to check the consistency between the figure structure generated while reading the specification excluding the brief description of the drawings with the structure created reading the brief description of the drawings. If each drawing figure has a consistent description and there is a one to one correspondence with each element of both sets then the process flows to 1122 where no errors are reported and optionally the process reports that the figures are consistent. If the figures are not consistent the process flows to section 1120 to report that the figures are inconsistent.

Now referring to Figure 12 which shows the method of the invention loading in claim words. The method defines a list of words known as claim words. The process starts at step 952 and loads the claim words into an array of claim words at step 950. The process ends at step 954. The claim words are words found in a claim that serve to delimit claim elements.

The following words and symbols are examples of claim words as described hereinabove.

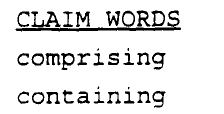

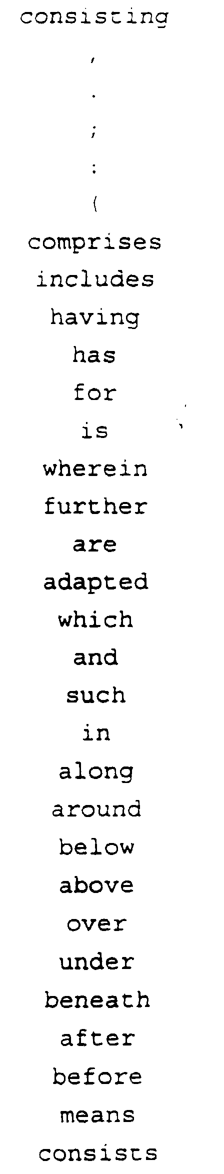

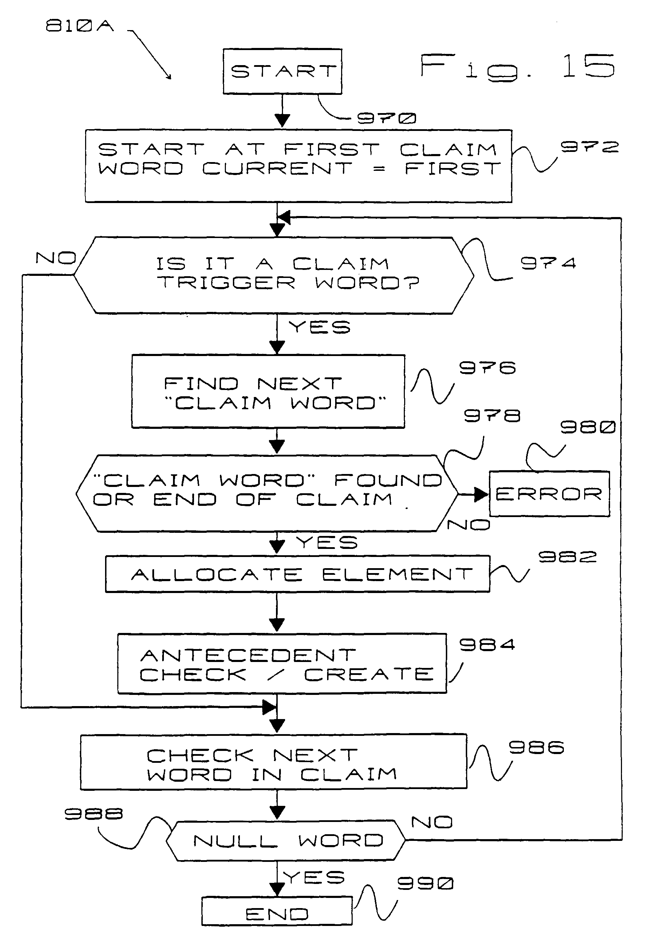

Claim words are used with reference to Figure 15 when reading in claim elements to check for antecedent basis.

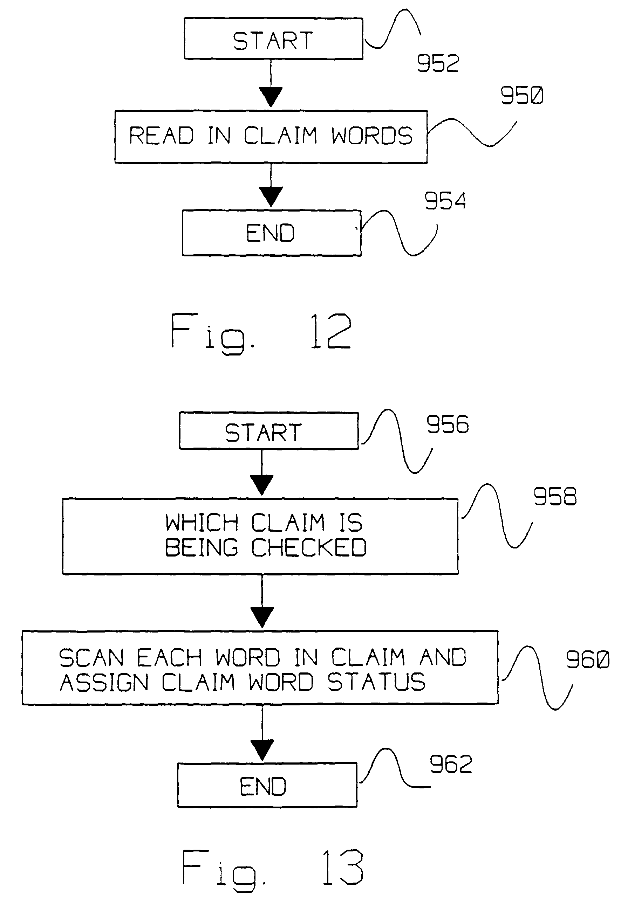

Now referring to Figure 13 which shows an alternate embodiment of the invention used to check whether or not a word in a claim is a claim word. The process of Figure 13 starts at step 956 and flows to step 958 where the claim being checked is determined. For instance, in one example, claim 1 will be checked. The process flows to step 960 where each word in claim 1 is scanned and assigned a claim word status. In this alternate embodiment of the invention the claim word status is used in subsequent processes of the invention to determine whether or not the word in question is indeed a claim word. Claim words are not considered to be part of claim elements. The process advances to step 962 where each word in the claim now has a structure associated with it to indicate whether it could possibly be a claim element or is a claim word.

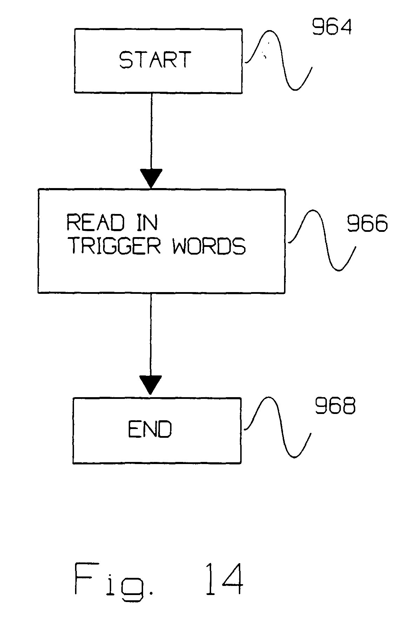

Now referring to Figure 14 which shows a method of reading trigger words. The process starts at 964 where the trigger words are read in. The process flows to 966 where an array is read of trigger words which serve to trigger the start of a claim element. Some trigger words that are commonly used in claims are "a", "an", "means", "means for", "at", "said" and "the". The process ends at step 968 where the trigger words create an array used in subsequent processes of the invention.

Now referring to Figure 15 which shows the method of the invention used to find claim elements within a claim. The process starts at step 970 where a particular claim, for instance, claim 1 will be examined for antecedent basis. The process 810A of Figure 15 is analogous to step 810 in Figure 8. The process first loads the current word to be the first word in the current claim. The process then flows to step 974 where the word is determined to be a trigger word. If the word is not a trigger ward the process flows to step 986 to check the next word in the claim. The process flows to 988 where if the next word is determined to be null the process ends at step 990. If the next word is not null the process returns to step 974 to check whether the next word is a trigger word. If the word being checked is a trigger word the process flows to 976 to find the next claim word. The process flows to step 978 to find whether or not a claim word is found. If it is not found the process advances to step 980 and indicates an error. If a claim word is found or the end of the claim is found the process flows to step 982 to allocate a new element which will include all words from the word immediately after the trigger word through and including the word immediately before the claim word. Thus the claimed element will be defined between the boundaries of the trigger word and the claim word. The process steps to 982 where the element is allocated and then the process flows to 984 for antecedent basis checking or antecedent basis creation according to the methods of Figure 8. The process then flows to 986 to check the next word in the claim and flows to step 988 to see if it is null. If it is null the process ends at step 990, if it is not, the process goes on to the next word.

In an alternate embodiment of the invention each trigger word may create alternate structures that form a number of additional antecedents beyond that specifically recited in the patent. For example, the phrase "a means for" will generate a number of alternate antecedents. For example, a claim recitation of "computing means for dividing by two" generates antecedents including "computing means" and "means for dividing by two", "computing means for dividing by two, and "dividing by two means".

In an alternate embodiment of the invention the patent examining process generates errors that have a correspondence to statutorily defined errors under § 112 and other sections. The output of the method and apparatus of checking a patent specification of the invention can produce computer generated office actions. Such office actions may be in the form generally used by the United States Patent and Trademark Office and thus serve as a quick and reliable method of spotting errors in a patent specification that are analogous similar or identical to the ones described above. Such errors include reference character errors, missing parts of the specification, inconsistency within the specification with regard to elements and antecedent basis problems regarding the claims.

Three hypothetical examples of automated office actions are detailed immediately below. The first example is the case wherein the disclosure lacks reference characters. The second example covers the situation where part of the disclosure is missing. And the third example shows how a report can be generated using the method of the invention for vague and indefinite claims.

Example one shows the method of the invention verifying reference characters. A report is generated in the form of an official office action in accordance with regulations set down in the Manual of Patent Examining Procedure, latest revision November, 1989. If duplicate reference characters are used, or reference characters are missing, for different stated elements the generated office action may include the following paragraph in accordance with MPEP § 608.01 using form paragraph 7.29. In this hypothetical example the reference character "10" was used in error for "110". An office action may be generated as follows.

**The disclosure is objected to because of the following informalities: In the specification on page 12, line 5 change reference character "10" to --110--. Appropriate correction is required.**

Without the present invention, the examiner would manually find and note informalities. With the use of the present invention, the informalities are automatically reported and a notice is generated.

Example two shows the method of the checking for the existence of parts of the patent. In this hypothetical example, during automatic examination of the patent the Abstract section was discovered to be missing. Again a report is generated in the form of an official office action in accordance with regulations set down in the Manual of Patent Examining Procedure, latest revision November, 1989. These individual error reports may be automatically compiled to form an official office action. The following paragraph is taken according to form paragraph 6.12 as stated in the MPEP § 608.01(b).

**This application does not contain an Abstract of the Disclosure as required by 37 CFR** **1.72(b). An abstract on a separate sheet is required.**

Example three shows the method of the invention for checking antecedents in the claims. The examiner would issue a rejection due to a vague or indefinite claim because of lack of antecedent basis for certain claim elements. This rejection may be automatically generated in accordance with MPEP § 706.03 form paragraph 7.34. After the form paragraph 7.34 the report generated by the method of the invention lists the claim elements found which have no antecedent basis as in the example shown below.

**Claim (1) rejected under 35 U.S.C. 112, second paragraph, as being indefinite for failing to particularly point out and distinctly claim the subject matter which the applicant regards as the invention.**

**The following claim elements lack antecedent basis:**
**Claim 1, line 5, "the computer"; and**
**Claim 10, line 5, "the memory".**

In such a way an examiner's office action covering inconsistent reference characters, missing parts of the disclosure and claims which are indefinite due to lack of antecedents may be generated by the method of the invention.

Optionally, the invention, at the request of the user, can search for words that are considered non-standard usage in the patent law. These non-standard usage words, like the phrase "consisting of" within a claim generally detract from the quality of the patent. Other such words and their locations in the patent are listed below. It is recognized that some of the listed words may have proper applicability in limited, specific usages. In those special cases another list may be used, or the generated report may be modified by the user.

| | Location | non-standard words |
|---|---|---|
| 1. | Transition from claim preamble | having |
| | | including |
| | | where in |
| | | constituting |
| | | consisting of |
| | | consisting essentially |
| 2. | Anywhere in the patent document | can |
| | | would |
| | | could |
| | | will |
| | | shall |
| | | you |
| 3. | In the Abstract of the Disclosure | comprises |
| | | wherein |
| | | means |
| | | means for |

## Claims

1. An automated method for checking a document stored in digital form for compliance with a predetermined set of structural rules, the document being comprised of a serial group of characters, the automated method comprising the steps of:
a. reading the serial group of characters (200-340);
b. identifying a plurality of subgroups of serial characters which relate to each other from within the serial group of characters (80); and
c. checking the plurality of subgroups for consistency of relation (440) with one another so as to comply with the predetermined set of structural rules.

2. The automated method of claim 1 wherein the serial group of characters comprises a plurality of character strings, wherein the automated method further comprises the steps of:
a. reading the plurality of character strings wherein each character string comprises at least one character (250-300); and
b. identifying each one of the plurality of character strings as one of a plurality of string types wherein a reference character type is one of the plurality of string types describing a reference character (310-340).

3. The method of claim 2 further comprising the steps of:
a. allocating a unique location for each reference character (330);
b. selecting each reference character in turn and finding at least a first preceding word for each occurrence of each selected reference character (80);
c. identifying the at least first preceding word as an element of the selected reference character (380) and repeating steps b and c until all occurrences of all reference characters have been found;
d. selecting each reference character in turn and counting (420) all identified elements (380) for each selected reference character; and
e. comparing all identified elements against each other (440) for each selected reference character to determine usage inconsistencies.

4. The method of claim 3 further including the step of reporting identified elements which do not match the other identified elements for a selected reference character (100).

5. The method of claim 2 further including the step of reading (20) a keyword file (1100) wherein the keyword file (1100) includes a plurality of keywords wherein each one of the plurality of keywords includes a related pointing character which indicates that a number may precede or follow an adjacent keyword.

6. The method of claim 1 further including the step of tokenizing subgroups of characters in the document after reading the serial group of characters (60).

7. The method of claim 1 wherein said step of identifying a plurality of subgroups of characters includes the steps of identifying (700-760), in a patent document, a predetermined number of sections of said document including a background section, a summary, a brief description of the drawings, a description of the preferred embodiment and a claims section, each section being preceded by a respective predetermined section header.

8. The method of claim 7 further including the step of reserving a line count for each identified document section so as to locate each section as needed for further processing.

9. The method of claim 6 wherein the step of reading the serial group of characters further includes the steps of:
a. filling an indexed string array with a currently selected character (230);
b. determining whether the currently selected character is a punctuation character (260);
c. if the currently selected character is determined to be punctuation then allocating the indexed string array to a state indicating punctuation (270);
d. terminating the indexed string array when a string delimiter is encountered (300);
e. determining whether the indexed string array is a reference character (320); and
f. if the indexed string array is determined to be a reference character then allocating the indexed string array to a state indicating a reference character (330), otherwise allocating the indexed string array to a state indicating a word (340).

10. The method of claim 9 wherein the step of allocating the indexed string array to a state indicating punctuation further includes the step of considering the special case where the currently selected character is a period and wherein a period is differentiated from a decimal point (350).

11. The method of claim 1 wherein the step of identifying a plurality of subgroups of serial characters comprises identifying a plurality of claims (800-834), and further including the steps of:
a. identifying each claim (800-834);
b. counting the at least one claim (120, 810, 811);
c. further identifying each claim as a dependent or independent claim (924, 926); and
d. for each identified dependent claim, further identifying a claim from which it depends (934, 938, 942, 946).

12. The method of claim 1 wherein the document is encoded in binary format.

13. The method of claim 1 wherein the step of checking the plurality of subgroups for consistency of relation (100) further includes the step of reporting inconsistencies as errors in binary format.

14. The method of claim 1 wherein the step of checking for consistency further includes the step of recognizing abbreviations and aliases.

15. The method of claim 5 wherein as an inconsistency is detected for a selected reference character a user of the method is requested to verify whether or not the serial group of characters causing the inconsistency is a new keyword (370) and if the serial group of characters causing the inconsistency is verified as the new keyword (370) the keyword file (1100) is updated.

16. The method of claim 5 further comprising the steps of:
a. assigning a type designator to each reference character, where the keyword file is used by the digital computer to differentiate numbers from reference characters (60);
b. selecting from memory each reference character in turn and finding at least one preceding word for each occurrence of the selected reference character (370);
c. identifying a first preceding word as an element of the selected reference character and repeating steps b and c until all occurrences of all reference characters have been found (390, 400, 410);
d. selecting from memory each reference character in turn and counting all identified elements (420) for each selected reference character (380); and
e. executing a set of computer process steps for comparing all identified elements against each other for each selected reference character to determine a consistency of usage (90).

17. The method of claim 16 further comprising the step of reporting at least one identified element which is not used consistently in relation to all identified elements for a selected reference character (100).

18. The method of claim 16 further comprising the step of checking for words matching identified elements which are not proximate a reference character (110).

19. The method of claim 16 further comprising the step of detecting an error for a selected reference character, wherein as each error is detected a user is requested to verify whether or not an indicated error is a keyword (20) and if the indicated error is verified as a keyword (20) the keyword file (1100) is updated.

20. The method of claim 7 in which one of said plurality of subgroups of characters comprises a brief description of drawings section, wherein at least one drawing is referred to by at least one figure reference, the method comprising the steps of:
a. locating the brief description of the drawing section (1104);
b. reading in the at least one figure reference wherein each figure reference includes at least one figure number and at least one figure description in the brief description of the drawings section (1106, 1108);
c. reading the patent specification exclusive of the brief description of the drawings section for specification figure numbers and specification figure descriptions (1112-1116); and
d. checking a consistency of usage of the specification figure numbers and figure descriptions against the brief description of the drawings section's at least one figure number and at least one figure description (1118).

21. The method of claim 1 wherein said step of identifying a plurality of subgroups of characters includes the steps of identifying a plurality of claims, each claim comprising a plurality of words, the method further including the steps of:
a. locating a lead claim with a lead claim number (902-914);
b. setting a claim count to one when the lead claim is found (922, 972);
c. checking whether the words after the lead claim number are consistent with claim drafting form (974-990);
d. checking for a next claim with a next claim number (910);
e. incrementing a claim count if the next claim is found (912);
f. checking whether the words after the next claim number are consistent with claim drafting form (974-990); and
g. repeating steps d through f until all claims have been counted.

22. The method of claim 21 further comprising the step of reporting claim numbers that do not follow a predetermined sequence (914).

23. The method of claim 21 wherein the step of locating a lead claim further comprises the step of obtaining the location of the lead claim by searching for claim language (804).

24. The method of claim 1 wherein said step of identifying a plurality of subgroups of characters includes the steps of identifying a plurality of successive claims, each claim comprising a plurality of words, the step of checking the plurality of subgroups for consistency of relation comprises checking for antecedent basis in said claims by:
a. searching for a claim element in at least one claim (810);
b. determining whether the claim element is a claim antecedent and if the claim element is a claim antecedent adding the claim antecedent to a list of antecedents (820, 826);
c. determining whether the claim element needs a claim antecedent (820), and if the claim element needs a claim antecedent, then checking the list of antecedents for the claim element (822-834); and
d. repeating steps b and c until all claim elements have been checked.

25. The method of claim 24 further comprising the step of checking whether a claim element to be added to the list of antecedents is already in the list of antecedents (822) and if the claim element is already in the list of antecedents, reporting an error (830).

26. The method of claim 24 wherein at least one claim is a dependent claim and the dependent claim has a list of antecedents for claim elements of the dependent claim wherein the method further comprises the step of checking the list of antecedents for claim elements of the dependent claim (824-832).

27. The method of claim 24 further comprising the step of reporting an error if an antecedent is not found in the antecedent list (834).

28. The method of claim 24 wherein the list of antecedents comprises a linked list.

29. The method of claim 24 further including the step of reporting claim element antecedents not referenced by other claim elements.

30. The method of claim 1 wherein said step of identifying a plurality of subgroups of characters includes the steps of identifying a plurality of successive claims, each claim comprising a plurality of words, the step of checking for consistency of relation further comprising the steps of:
a. loading a first claim as a current claim (922);
b. reading the current claim to find references to claims (924);
c. if there are no references to claims in the current claim, then indicating the current claim as an independent claim (926);
d. if there are references to claims in the current claim, then determining whether the current claim refers to itself (934);
e. if there are references to claims in the current claim, then determining whether the current claim refers to a non-existent claim (938);
f. if there are references to claims in the current claim, then determining whether the current claim refers to a higher numbered claim (942); and
g. loading a next claim as the current claim (928-930) and logically repeating steps b through g.

31. The method of claim 30 further including the step of reporting an error if the current claim refers to itself (936).

32. The method of claim 30 further including the step of reporting an error if the current claim refers to a non-existent claim (940).

33. The method of claim 30 further including the step of reporting an error if the current claim refers to a higher numbered claim (944).

34. The method of claim 30 further including the step of reporting a dependency structure of all claims (932).

35. The method of claim 24 wherein the step of checking the list of antecedents (822-834) for the claim element further comprises the steps of:
a. checking the claim element on a word by word basis against each antecedent in the list of antecedents (822, 824, 832);
b. determining if any antecedent in the list of antecedents does not match the claim element (822, 824, 832).

36. The method of claim 24 wherein at least one claim comprises a plurality of words starting with a first word, and wherein the step of finding a claim element further comprises the steps of:
a. loading the first word of at least one claim as a current word (972);
b. checking whether the current word is a trigger word (974);
c. if the current word is not a trigger word, then loading a next word in the at least one claim as the current word and repeating step b (986);
d. reading forward from the trigger word to a predetermined claim word to determine a claim element (976);
e. if a predetermined claim word is not found, then reading forward to the end of the at least one claim to determine a claim element (978);
f. if no claim word or end of the at least one claim is found, then reporting an error (980);
g. loading the next word in the at least one claim as the current word (986); and
h. repeating steps b through g if the current word is not null (988).

37. The method of claim 1 wherein the step of identifying a plurality of subgroups of serial characters which relate to one another includes finding claim elements (810A) in a patent document having a claims section wherein the claims section begins at a first word of the claims section and the claims section includes at least one predetermined trigger word, and comprises the steps of:
a. loading the first word of the claims section as a current word (972);
b. checking whether the current word is a trigger word (974);
c. if the current word is not a trigger word, then loading a next word in the claims section as the current word (986) and repeating step b;
d. reading forward from the trigger word to a predetermined claim word to determine a claim element (976);
e. if a predetermined claim word is not found, then reading forward to the end of the claims section to determine a claim element (978);
f. if no claim word or end of the claims section is found, then reporting an error (980);
g. loading the next word in the claims section as the current word (986); and
h. repeating steps b through g if the current word is not null (988).

38. The method of claim 37 wherein at the least one predetermined trigger word is selected from the group consisting of: a, an, means for, at least one, the, said.

39. The method of claim 38 wherein the step of identifying all claim elements for each claim (976-978) further includes the step of looking backward at a word string preceding the "means for" trigger word for that claim and if a word preceding the word string is null or a number or a claim word then allocating the word string as a claim antecedent (982).

40. The method of claim 37 wherein a plurality of claim antecedents are generated for each claim element, and wherein the plurality of claim antecedents are synonymous with the claim element (984).

41. The method claim 37 wherein the predetermined claim word is selected from the group consisting of: "comprising", "containing", "consisting", ",", ".", ";", "(", "comprises", "includes", "having", "has", "for", "is", "wherein", "further", "are", "adapted", "which", "and", "such" "in", "along", "around", "below", "above", "over", "under", "beneath", "after", "before", "means" and "consists".

42. The method of claim 37 wherein the step of identifying all claim elements for each claim (976-978) further includes the steps of:
a. in a case where no antecedent delimiter is found and no "means for" phase is found, looking for a phase "at least one" by checking the current word string against "at" and looking for "least" and "one" following "at";
b. reading forward from "at least one" or "at least";
c. finding a word "means" then looking for a word "for" to be a word string immediately following "means";
d. if "means for" is found then reading "means for" until a current word looking forward is null or a number or a claim word; and
e. allocating the forward word string as an antecedent (982).

43. The method of claim 5 wherein the keywords comprise words selected from the group consisting of: 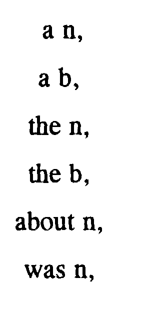 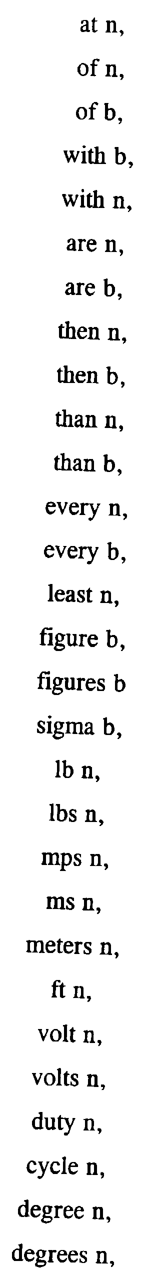 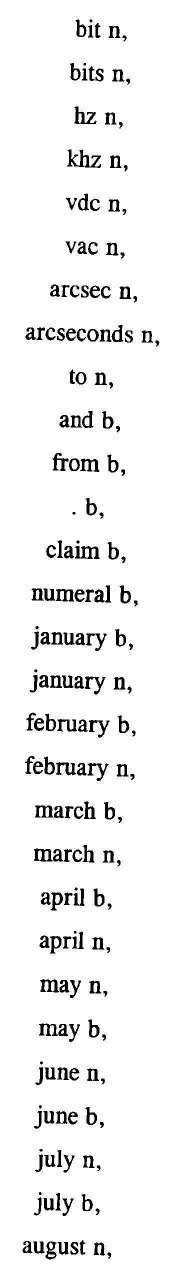 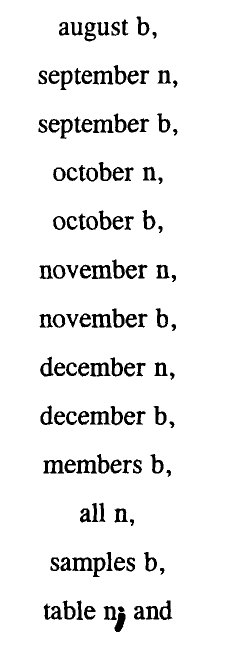 wherein a character "n" following a selected keyword represents "next" (520) and indicates that a number may follow the selected keyword and a character "b" following the selected keyword represents "back" (510) and indicates that a number may precede the selected keyword.

## Patentansprüche

1. Automatisiertes Verfahren zum Überprüfen eines in digitaler Form gespeicherten, Dokuments auf Erfüllung eines vorgegebenen Satzes struktureller Regeln, wobei das Dokument aus einer seriellen Gruppe von Zeichen besteht, mit den Schritten:
a. Lesen der seriellen Gruppe von Zeichen (200-340);
b. Identifizieren einer Mehrzahl von Untergruppen aufeinander bezogener serieller Zeichen in der seriellen Gruppe von Zeichen (80); und
c. Überprüfen der Mehrzahl von Untergruppen auf Übereinstimmung der Beziehung (440) miteinander zum Erfüllen des vorgegebenen Satzes struktureller Regeln.

2. Automatisiertes Verfahren nach Anspruch 1, dadurch gekennzeichnet, daß die serielle Gruppe von Zeichen eine Mehrzahl von Zeichen-Strings aufweist, mit den zusätzlichen Schritten:
a. Lesen der Mehrzahl von Zeichen-Strings, wobei jedes Zeichen-Swing mindestens ein Zeichen enthält (250-300); und
b. Identifizieren jedes Zeichen-Strings der Mehrzahl von Zeichen-Strings als einen Typ einer Mehrzahl von Zeichen-String-Typen, wobei ein Bezugszeichentyp einer der Typen der Mehrzahl von Zeichen-Swing-Typen ist und ein Bezugszeichen beschreibt (310-340).

3. Verfahren nach Anspruch 2, mit den zusätzlichen Schritten:
a. Zuordnen einer eindeutig definierten Adresse zu jedem Bezugszeichen (330);
b. Auswählen jedes Bezugszeichens der Reihe nach und Finden mindestens eines vorangestellten Wortes für jedes Vorkommen jedes Bezugszeichens (80);
c. Identifizieren des mindestens ersten vorangestellten Wortes als ein Element des ausgewählten Bezugszeichens (380) und Wiederholen der Schritte b und c bis alle Vorkommen aller Bezugszeichen gefunden sind;
d. Auswählen jedes Bezugszeichens der Reihe nach und Zählen (420) aller identifizierten Elemente (380) für jedes ausgewählte Bezugszeichen; und
e. Vergleichen aller identifizierten Elemente miteinander (440) für jedes ausgewählte Bezugszeichen zum Bestimmen von Verwendungsabweichungen.

4. Verfahren nach Anspruch 2, mit dem zusätzlichen Schritt des Meldens identifizierter Elemente, die nicht zu den anderen identifizierten Elementen eines ausgewählten Bezugszeichens passen (100).

5. Verfahren nach Anspruch 2, mit dem zusätzlichen Schritt des Lesens (20) einer Schlüsselwortdatei (1100), wobei die Schlüsselwortdatei eine Mehrzahl von Schlüsselwörtern enthält, wobei jedes der Mehrzahl von Schlüsselwörtern einen zugewiesenen Zeiger aufweist, der anzeigt, daß eine Nummer einem benachbarten Schlüsselwort vorangestellt oder nachgestellt sein kann.

6. Verfahren nach Anspruch 1, mit dem zusätzlichen Schritt des Bildens von Token von Untergruppen von Zeichen in dem Dokument nach dem Lesen der seriellen Gruppe von Zeichen (60).

7. Verfahren nach Anspruch 1, dadurch gekennzeichnet, daß der Schritt des Identifizierens einer Mehrzahl von Untergruppen von Zeichen in einem Patentdokument den Schritt des Identifizierens (700-760) einer vorbestimmten Anzahl von Abschnitten des Dokuments mit einem (technischen) Hintergrund, einer Übersicht, einer Kurzbeschreibung der Zeichnungen, einer Beschreibung der bevorzugten Ausführungsform und Patentansprüchen, wobei jedem Abschnitt eine entsprechende festgelegte Überschrift vorangestellt ist.

8. Verfahren nach Anspruch 1, mit dem zusätzlichen Schritt des Reservierens von Zeilennummern für jeden identifizierten Dokumentabschnitt zum Lokalisieren jedes Abschnitts zum weiteren Verarbeiten.

9. Verfahren nach Anspruch 6, dadurch gekennzeichnet, daß der Schritt des Lesens der seriellen Gruppe von Zeichen zusätzlich die Schritte aufweist:
a. Füllen eines indizierten String-Arrays mit einem aktuell gewählten Zeichen (230);
b. Feststellen, ob das aktuell gewählte Zeichen ein Interpunktionszeichen ist (260);
c. wenn das aktuell ausgewählte Zeichen ein Interpunktionszeichen ist, dann Zuweisen des indizierten String-Arrays zu einem Interpunktion anzeigenden Zustand (270);
d. Beenden des indizierten String-Arrays, wenn ein String-Begrenzer angetroffen wird (300);
e. Bestimmen, ob das indizierte String-Array ein Bezugszeichen ist (320); und
f. wenn das indizierte String-Array ein Bezugszeichen ist dann Zuweisen des indizierten String-Arrays zu einem ein Bezugszeichen anzeigenden Zustand (330), ansonsten Zuweisen des indizierten String-Arrays zu einem ein Wort anzeigenden Zustand (340).

10. Verfahren nach Anspruch 9, dadurch gekennzeichnet, daß der Schritt des Zuweisens des indizierten String-Arrays zu einem Interpunktion anzeigenden Zustand zusätzlich den Schritt des Berücksichtigens des besonderen Falls, in dem das aktuell gewählte Zeichen ein Punkt ist, aufweist, wobei ein Punkt von einem Dezimalpunkt unterschieden wird (350).

11. Verfahren nach Anspruch 1, dadurch gekennzeichnet, daß der Schritt des Identifizierens einer Mehrzahl von Untergruppen von seriellen Zeichen das Identifizieren einer Mehrzahl von Patentansprüchen einschließt (800-834), und weiterhin die Schritte aufweist:
a. Identifizieren jedes Patentanspruchs (800-834);
b. Zählen des mindestens einen Patentanspruchs (120, 810, 811);
c. weiteres Identifizieren jedes Patentanspruchs als abhängigen oder unabhängigen Patentanspruch (924, 926); und
d. weiteres Identifizieren eines Patentanspruchs, auf den ein abhängiger Patentanspruch rückbezogen ist, für jeden identifizierten abhängigen Patentanspruch (934, 938, 942, 946).

12. Verfahren nach Anspruch 1, dadurch gekennzeichnet, daß das Dokument in einem binären Format codiert ist.

13. Verfahren nach Anspruch 1, dadurch gekennzeichnet, daß der Schritt des Überprüfens der Mehrzahl von Untergruppen auf Übereinstimmung der Beziehung (100) zusätzlich den Schritt des Berichtens von Abweichungen als Fehler in binärem Format aufweist.

14. Verfahren nach Anspruch 1, dadurch gekennzeichnet, daß der Schritt des Überprüfens auf Übereinstimmung zusätzlich den Schritt des Erkennens von Abkürzungen und Pseudonymen aufweist.

15. Verfahren nach Anspruch 5, dadurch gekennzeichnet, daß, während eine Abweichung für ein gewähltes Bezugszeichen festgestellt wird, ein Benutzer des Verfahrens aufgefordert wird zu verifizieren, ob die serielle Gruppe von Zeichen, die die Abweichung hervorruft, ein neues Schlüsselwort ist (370), und daß, falls die serielle Gruppe von Zeichen, die die Abweichung hervorruft, als neues Schlüsselwort verifiziert ist (370), die Schlüsselwort-Datei aktualisiert wird (1100).

16. Verfahren nach Anspruch 5, mit den zusätzlichen Schritten:
a. Zuweisen eines Typbezeichners zu jedem Bezugszeichen, wenn die Schlüsselwortdatei durch den digitalen Computer verwendet wird, um Nummern von Bezugszeichen zu unterscheiden (60);
b. Auswählen jedes Bezugszeichens nacheinander aus dem Speicher und Finden zumindest eines vorangestellten Wortes für jedes Auftreten des ausgewählten Bezugszeichens (370);
c. Identifizieren eines ersten vorangestellten Wortes als ein Element des ausgewählten Bezugszeichens und Wiederholen der Schritte b und c, bis jedes Auftreten aller Bezugszeichen gefunden wurde (390, 400, 410);
d. Auswählen jedes Bezugszeichens nacheinander aus dem Speicher und Zählen aller identifizierten Elemente (420) jedes ausgewählten Bezugszeichens (380); und
e. Ausführen eines Satzes von Computerverfahrensschritten zum Vergleichen aller identifizierten Elemente miteinander für jedes ausgewählte Bezugszeichen, um eine Übereinstimmung der Verwendung zu bestimmen (90).

17. Verfahren nach Anspruch 16, mit dem zusätzlichen Schritt des Meldens mindestens eines identifizierten Elements, das nicht übereinstimmend mit allen identifizierten Elementen für ein ausgewähltes Bezugszeichen verwendet wird (100).

18. Verfahren nach Anspruch 16, mit dem zusätzlichen Schritt des Überprüfens auf Wörter, die zu identifizierten Elementen passen, die nicht neben einem Bezugszeichen stehen (110).

19. Verfahren nach Anspruch 16, mit dem zusätzlichen Schritt des Feststellens eines Fehlers für ein ausgewähltes Bezugszeichen, wobei, wenn ein Fehler festgestellt wird, ein Benutzer aufgefordert wird zu verifizieren, ob ein identifizierter Fehler ein Schlüsselwort ist (20), und daß, falls der identifizierte Fehler als Schlüsselwort verifiziert wird (20), die Schlüsselwort-Datei (1100) aktualisiert wird.

20. Verfahren nach Anspruch 7, wobei eine der Mehrzahl von Untergruppen von Zeichen, einen Abschnitt einer Kurzbeschreibung der Zeichnungen enthält, wobei auf mindestens eine Zeichnung durch eine Figurreferenz Bezug genommen wird, mit den Schritten:
a. Lokalisieren des Abschnitts der Kurzbeschreibung der Zeichnungen (1104);
b. Einlesen der mindestens einen Figurreferenz, wobei jede Figurreferenz mindestens eine Figurennummer und mindestens eine Figurenbeschreibung in dem Abschnitt der Kurzbeschreibung der Figuren enthält (1106, 1108);
c. Lesen der Patentbeschreibung ohne den Abschnitt der Kurzbeschreibung der Zeichnungen hinsichtlich Figurennummern der Beschreibung und Figurenbeschreibungen der Beschreibung (1112-1116); und
d. Überprüfen einer Verwendungsübereinstimmung der Figurennummern der Beschreibung und der Figurenbeschreibung mit dem Abschnitt der Kurzbeschreibung der Zeichnungen für mindestens eine Figurennummer und mindestens eine Figurenbeschreibung (1118).

21. Verfahren nach Anspruch 1, dadurch gekennzeichnet, daß der Schritt des Identifizierens einer Mehrzahl von Untergruppen von Zeichen die Schritte des Identifizierens einer Mehrzahl von Patentansprüchen beinhaltet, wobei jeder Patentanspruch eine Mehrzahl von Wörtern enthält, mit den zusätzlichen Schritten:
a. Lokalisieren eines vorangehenden Patentanspruchs mit einer vorangehenden Patentanspruchsnummer (902-914);
b. Setzen eines Patentanspruchzählers auf 1, wenn der vorangehende Patentanspruch gefunden wurde (922, 972);
c. Überprüfen, ob die Wörter nach der vorangehenden Patentanspruchsnummer mit dem Formular der entworfenen Patentansprüche übereinstimmt (974-990);
d. Überprüfen auf einen nächsten Patentanspruch mit einer nächsten Patentanspruchsnummer (910);
e. Erhöhen der Zählung der Patentansprüche, wenn der nächste Patentanspruch gefunden wurde (912);
f. Überprüfen, ob die Wörter nach der nächsten Patentanspruchsnummer mit dem Formular der entworfenen Patentansprüche übereinstimmen (974-990); und
g. Wiederholen der Schritte d bis f, bis alle Patentansprüche gezählt wurden.

22. Verfahren nach Anspruch 21, mit dem zusätzlichen Schritt des Berichtens von Patentanspruchnummern, die nicht zu einer vorbestimmten Abfolge passen (914).

23. Verfahren nach Anspruch 21, dadurch gekennzeichnet, daß der Schritt des Lokalisierens eines vorangehenden Patentanspruchs den zusätzlichen Schritt des Aufnehmens des Ortes des vorangehenden Patentanspruchs durch Suchen nach Patentanspruchausdrücken aufweist (804).

24. Verfahren nach Anspruch 1, dadurch gekennzeichnet, daß der Schritt des Identifizierens einer Mehrzahl von Untergruppen von Zeichen die Schritte des Identifizierens einer Mehrzahl von aufeinander folgenden Patentansprüchen aufweist, wobei jeder Patentanspruch eine Mehrzahl von Wörtern aufweist, wobei der Schritt des Überprüfens der Mehrzahl von Untergruppen auf Übereinstimmung der Beziehung das Überprüfen auf ein erstes Glied in dem Patentanspruch einschließt, durch:
a. Suchen nach einem Element eines Patentanspruchs in zumindest einem Patentanspruch (810);
b. Bestimmen, ob das Element des Patentanspruchs ein erstes Glied eines Patentanspruchs ist und, falls das Element des Patentanspruchs ein erstes Glied eines Patentanspruchs ist, Hinzufügen des ersten Glieds des Patentanspruchs zu einer Liste von ersten Gliedern (820, 826);
c. Bestimmen, ob das Element des Patentanspruchs ein erstes Glied des Patentanspruchs benötigt (820), und, falls das Element des Patentanspruchs ein erstes Glied eines Patentanspruchs benötigt, darauf folgendes Überprüfen der Liste von ersten Gliedern für das Element des Patentanspruchs (822-834); und
d. Wiederholen der Schritte b und c, bis alle Elemente des Patentanspruchs überprüft wurden.

25. Verfahren nach Anspruch 24, mit dem zusätzlichen Schritt des Überprüfens, ob ein Element eines Patentanspruchs, das der Liste von ersten Gliedern hinzuzufügen ist, bereits in der Liste von ersten Gliedern enthalten ist (822) und, falls das Element des Patentanspruchs bereits in der Liste der ersten Glieder enthalten ist, Berichten eines Fehlers (830).

26. Verfahren nach Anspruch 24, dadurch gekennzeichnet, daß mindestens ein Patentanspruch ein abhängiger Patentanspruch ist und der abhängige Patentanspruch eine Liste von ersten Gliedern für Elemente des abhängigen Patentanspruchs aufweist, wobei das Verfahren den zusätzlichen Schritt des Überprüfens der Liste von ersten Gliedern auf Elemente des abhängigen Patentanspruchs aufweist (824-832).

27. Verfahren nach Anspruch 24, mit dem zusätzlichen Schritt des Berichtens eines Fehlers, wenn ein erstes Glied nicht in der Liste der ersten Glieder gefunden wird (834).

28. Verfahren nach Anspruch 24, dadurch gekennzeichnet daß die Liste von ersten Gliedern eine verbundene Liste aufweist.

29. Verfahren nach Anspruch 24, mit dem zusätzlichen Schritt des Berichtens von ersten Gliedern von Elementen von Patentansprüchen, auf die durch andere Elemente von Patentansprüchen kein Bezug genommen wird.

30. Verfahren nach Anspruch 1, dadurch gekennzeichnet, daß der Schritt des Identifizierens einer Mehrzahl von Untergruppen von Zeichen die Schritte des Identifizierens einer Mehrzahl von aufeinander folgenden Patentansprüchen aufweist, wobei jeder Patentanspruch eine Mehrzahl von Wörtern aufweist, wobei der Schritt des Überprüfens auf Übereinstimmung der Beziehung die weiteren Schritte aufweist:
a. Laden eines ersten Patentanspruchs als aktuellen Patentanspruch (922);
b. Lesen des aktuellen Patentanspruchs zum Finden von Rückbeziehungen auf Patentansprüche (924);
c. wenn keine Rückbezüge auf Patentansprüche in dem aktuellen Patentanspruch vorhanden sind, dann Anzeigen, daß der aktuelle Patentanspruch ein unabhängiger Patentanspruch 1 (926);
d. wenn keine Rückbezüge auf Patentansprüche in dem aktuellen Patentanspruch vorhanden sind, dann Bestimmen, ob der aktuelle Patentanspruch auf sich selbst rückbezogen ist (934);
e. wenn Rückbezüge auf Patentansprüche in dem aktuellen Patentanspruch vorhanden sind, dann Bestimmen, ob der aktuelle Patentanspruch auf einen nicht existenten Patentanspruch rückbezogen ist (938);
f. wenn Rückbezüge auf Patentansprüche in dem aktuellen Patentanspruch vorhanden sind, dann Bestimmen, ob sich der aktuelle Patentanspruch auf einen Patentanspruch auf einen höher numerierten Patentanspruch rückbezieht (942); und
g. Laden eines nächsten Patentanspruchs als aktuellen Patentanspruch (928-930) und logisches Wiederholen der Schritte b bis g.

31. Verfahren nach Anspruch 30, mit dem zusätzlichen Schritt des Berichtens eines Fehlers, wenn der aktuelle Patentanspruch auf sich selbst rückbezogen ist (936).

32. Verfahren nach Anspruch 30, mit dem zusätzlichen Schritt des Berichtens eines Fehlers, wenn der aktuelle Patentanspruch auf einen nicht existenten Patentanspruch rückbezogen ist (940).

33. Verfahren nach Anspruch 30, mit dem zusätzlichen Schritt des Berichtens eines Fehlers, wenn der aktuelle Patentanspruch auf einen höher numerierten Patentanspruch rückbezogen ist (944).

34. Verfahren nach Anspruch 30, mit dem zusätzlichen Schritt des Berichtens einer Abhängigkeitsstruktur aller Patentansprüche (932).

35. Verfahren nach Anspruch 24, dadurch gekennzeichnet, daß der Schritt des Überprüfens der Liste der ersten Glieder (822-834) für alle Elemente des Patentanspruchs weiterhin die Schritte aufweist:
a. Überprüfen des Elements des Patentanspruchs anhand der einzelnen Wörter mit jedem ersten Glied in der Liste erster Glieder (822, 824, 832);
b. Bestimmen, ob ein erstes Glied in der Liste erster Glieder nicht zu dem Element des Patentanspruchs paßt (822, 824, 832).

36. Verfahren nach Anspruch 24, dadurch gekennzeichnet, daß mindestens ein Patentanspruch eine Mehrzahl von Wörtern aufweist, die mit einem ersten Wort beginnt, und daß der Schritt des Findens eines Elements eines Patentanspruchs zusätzlich die Schritte aufweist:
a. Laden des ersten Wortes mindestens eines Patentanspruchs als ein aktuelles Wort (972);
b. Überprüfen, ob das aktuelle Wort ein auslösendes Wort ist (974);
c. wenn das aktuelle Wort kein auslösendes Wort ist, dann Laden eines nächsten Wortes in dem mindestens einem Patentanspruch als aktuelles Wort und Wiederholen des Schrittes b (986);
d. Lesen in Vorwärtsrichtung von dem auslösenden Wort bis zu einem vorbestimmten Wort eines Patentanspruchs zum Bestimmen eines Elements eines Patentanspruchs (976);
e. wenn ein vorbestimmtes Wort eines Patentanspruchs nicht gefunden wird, dann Lesen in Vorwärtsrichtung bis zu dem Ende des mindestens einen Patentanspruchs zum Bestimmen eines Elements eines Patentanspruchs (978);
f. wenn kein Wort eines Patentanspruchs oder das Ende des mindestens einen Patentanspruchs gefunden wird, dann Melden eines Fehlers (980);
g. Laden des nächsten Wortes in dem mindestens einen Patentanspruch als das aktuelle Wort (986); und
h. Wiederholen der Schritte b bis g, wenn das aktuelle Wort nicht Null ist (988).

37. Verfahren nach Anspruch 1, dadurch gekennzeichnet, daß der Schritt des Identifizierens einer Mehrzahl von Untergruppen von seriellen Zeichen, die aufeinander bezogen sind, das Finden von Elementen von Patentansprüchen (810A) in einem Patentdokument einschließt, das einen Abschnitt von Patentansprüchen besitzt, wobei der Abschnitt der Patentansprüche mit einem ersten Wort beginnt und der Abschnitt der Patentansprüche mindestens ein vorbestimmtes auslösendes Wort beinhaltet, und die Schritte aufweist:
a. Laden des ersten Wortes des Abschnitts der Patentansprüche als ein aktuelles Wort (972);
b. Überprüfen, ob das aktuelle Wort ein auslösendes Wort ist (974);
c. wenn das aktuelle Wort kein auslösendes Wort ist, dann Laden eines nächsten Wortes in dem Abschnitt der Patentansprüche als aktuelles Wort (986) und Wiederholen des Schrittes b;
d. Lesen in Vorwärtsrichtung von dem auslösenden Wort bis zu einem vorbestimmten Wort eines Patentanspruchs zum Bestimmen eines Elements eines Patentanspruchs (976);
e. wenn ein vorbestimmtes Wort eines Patentanspruchs nicht gefunden wird, dann Lesen in Vorwärtsrichtung bis zu dem Ende des Abschnitts der Patentansprüche zum Bestimmen eines Elements eines Patentanspruchs (978);
f. wenn kein Wort eines Patentanspruchs oder Ende des Bereichs der Patentansprüche gefunden wird, dann Berichten eines Fehlers (980);
g. Laden des nächsten Wortes in dem Abschnitt der Patentansprüche als aktuelles Wort (986); und
h. Wiederholen der Schritte b bis g, wein das aktuelle Wort nicht Null ist (988).

38. Verfahren nach Anspruch 37, dadurch gekennzeichnet, daß zumindest ein vorbestimmtes, auslösendes Wort aus der Gruppe ausgewählt wird, die besteht aus: ein, Mittel zum, mindestens ein, der (die, das), besagter.

39. Verfahren nach Anspruch 38, dadurch gekennzeichnet, daß der Schritt des Identifizierens aller Elemente des Patentanspruchs für jeden Patentanspruch (976-978) zusätzlich den Schritt des Betrachtens eines Wort-Strings in Rückwärtsrichtung, wobei der Wort-String dem "Mittel zum" auslösenden Wort in diesem Patentanspruch vorausgeht, aufweist und, wenn ein dem Wort-String vorangehendes Wort Null oder eine Zahl oder ein Wort eines Patentanspruchs ist, dann Zuweisen des Wort-Strings als ein erstes Glied eines Patentanspruchs (982).

40. Verfahren nach Anspruch 37, dadurch gekennzeichnet, daß eine Mehrzahl von ersten Gliedern des Patentanspruchs für jedes Element eines Patentanspruchs generiert wird, und daß die Mehrzahl von ersten Gliedern des Patentanspruchs synonym zu dem Element des Patentanspruchs ist (984).

41. Verfahren nach Anspruch 37, dadurch gekennzeichnet, daß das vorbestimmte Wort des Patentanspruchs aus der Gruppe ausgewählt wird, die besteht aus: "aufweisen", "enthalten", "bestehen", ",", ".", ";", "(", "aufweist", "beinhaltet" "hat" "zum" "ist" "wobei", "zusätzlich", "sind", "ausgebildet", "welcher", "und'", "solcher", "in", "entlang", "um", "unterhalb", "oberhalb", "über", "unter", "unterhalb", "nach", "vor", "Mittel" und "beinhaltet".

42. Verfahren nach Anspruch 37, dadurch gekennzeichnet, daß der Schritt des Identifizierens aller Elemente des Patentanspruchs für jeden Patentanspruch (976-978) zusätzlich die Schritte aufweist:
a. in einem Fall, in dem kein erster Begrenzer und kein "Mittel zum"-Satzteil gefunden wurde, Suchen nach einem "mindestens ein"-Satzteil durch Überprüfen des aktuellen Wort-Strings auf "mindestens" und "ein" und "ein" folgend auf "mindestens";
b. Lesen in Vorwärtsrichtung von "mindestens ein" oder "mindestens";
c. Finden eines Wortes "Mittel", dann Suchen nach einem Wort "zum" als Wort-String, das unmittelbar auf "Mittel" folgt;
d. wenn "Mittel zum" gefunden wurde, dann Lesen von "Mittel zum" bis das aktuelle Wort in Vorwärtsrichtung Null oder die Nummer eines Worts eines Patentanspruchs ist; und
e. Zuweisen der Vorwärts-Wortfolge als ein erstes Glied (982).

43. Verfahren nach Anspruch 5, dadurch gekennzeichnet, daß die Schlüsselwörter Wörter einschließen, die aus der folgenden Gruppe ausgewählt werden: 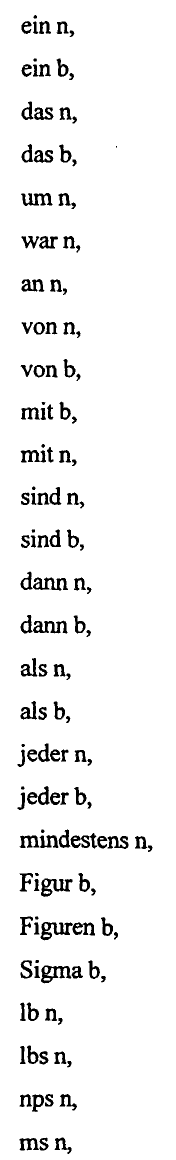 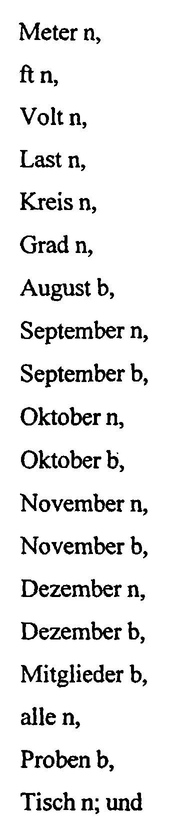 daß ein Zeichen "n" folgend auf ein ausgewähltes Schlüsselwort "nächster" darstellt (520) und anzeigt, daß eine Nummer dem ausgewählten Schlüsselwort folgen kann und ein Zeichen "b" folgend dem ausgewählten Schlüsselwort "zurück" ("back") (510) bedeutet und anzeigt, daß eine Nummer dem ausgewählten Schlüsselwort vorangestellt sein kann.

## Revendications

1. Procédé automatique pour contrôler un document enregistré sous forme numérique eu égard à sa conformité avec un ensemble prédéterminé de règles structurelles, le document se composant d'un groupe série de caractères, le procédé automatique comprenant les étapes consistant :
a. à lire le groupe série de caractères (200-340) ;
b. à identifier une pluralité de sous-groupes de caractères série qui se rapportent les uns aux autres à partir du groupe série de caractères (80) ; et
c. à contrôler la pluralité de sous-groupes eu égard à la cohérence de la relation (440) des uns avec les autres de manière à se conformer à l'ensemble prédéterminé de règles structurelles.

2. Procédé automatique selon la revendication 1, dans lequel le groupe série de caractères comprend une pluralité de chaînes de caractères, dans lequel le procédé automatique comprend, en outre, les étapes consistant :
a. à lire la pluralité de chaînes de caractères dans lesquelles chaque chaîne de caractères comprend au moins un caractère (250-300) ; et
b. à identifier chacune de la pluralité de chaînes de caractères comme une d'une pluralité de types de chaînes dans laquelle un type de caractère de référence est celui de la pluralité de types de chaînes qui décrit un caractère de référence (310-340).

3. Procédé selon la revendication 2 comprenant, en outre, les étapes consistant :
a. à allouer une position unique pour chaque caractère de référence (330) ;
b. à sélectionner chaque caractère de référence à son tour et à obtenir au moins un premier mot précédent pour chaque occurrence de chaque caractère de référence sélectionné (80) ;
c. à identifier cet au moins premier mot précédent en tant qu'élément du caractère de référence sélectionné (380) et à répéter les étapes b et c jusqu'à ce que toutes les occurrences de tous les caractères de référence aient été obtenues ;
d. à sélectionner chaque caractère de référence à son tour et à compter (420) tous les éléments identifiés (380) pour chaque caractère de référence sélectionné ; et
e. à comparer tous les éléments identifiés les uns avec les autres (440) pour chaque caractère de référence sélectionné afin de déterminer des incohérences d'usage.

4. Procédé selon la revendication 3, incluant, en outre, l'étape consistant à rapporter les éléments identifiés qui ne correspondent pas aux autres éléments identifiés pour un caractère de référence sélectionné (100).

5. Procédé selon la revendication 2, incluant, en outre, l'étape consistant à lire (20) un fichier de mots clés (1100), dans lequel le fichier de mots clés (1100) inclut une pluralité de mots clés et dans lequel chacun de la pluralité de mots clés inclut un caractère de pointage associé qui indique qu'un nombre peut précéder ou suivre un mot clé adjacent.

6. Procédé selon la revendication 1, incluant, en outre, l'étape consistant à symboliser les sous-groupes de caractères du document après avoir lu le groupe série de caractères (60).

7. Procédé selon la revendication 1, dans lequel ladite étape consistant à identifier une pluralité de sous-groupes de caractères inclut les étapes consistant à identifier (700-760), dans un document de brevet, un nombre prédéterminé de sections dudit document incluant une section d'arrière-plan, un résumé, une brève description des dessins, une description du mode de réalisation préféré et une section des revendications, chaque section étant précédée d'un en-tête de section prédéterminé respectif.

8. Procédé selon la revendication 7, incluant, en outre, les étapes consistant à réserver un comptage de lignes pour chaque section de document identifiée de façon à situer chaque section en cas de traitement additionnel nécessaire.

9. Procédé selon la revendication 6, dans lequel l'étape consistant à lire le groupe série de caractères inclut, en outre, les étapes consistant :
a. à remplir un tableau de chaînes indexées avec un caractère présentement sélectionné (230) ;
b. à déterminer si le caractère présentement sélectionné est un caractère de ponctuation ou non (260) ;
c. si le caractère présentement sélectionné est déterminé comme s'agissant d'une ponctuation, alors à allouer le tableau de chaînes indexées à un état indiquant une ponctuation (270) ;
d. à terminer le tableau de chaînes indexées lorsqu'un délimiteur de chaînes est rencontré (300) ;
e. à déterminer si le tableau de chaînes indexées est un caractère de référence ou non (320) ; et
f. si le tableau de chaînes indexées est déterminé comme s'agissant d'un caractère de référence, alors à allouer le tableau de chaînes indexées à un état indiquant un caractère de référence (330), sinon, à allouer le tableau de chaînes indexées à un état indiquant un mot (340).

10. Procédé selon la revendication 9, dans lequel l'étape consistant à allouer le tableau de chaînes indexées à un état indiquant une ponctuation inclut, en outre, l'étape consistant à considérer le cas spécial dans lequel le caractère présentement sélectionné est point de ponctuation et dans lequel un point de ponctuation se différencie d'un point décimal (350).

11. Procédé selon la revendication 1, dans lequel l'étape consistant à identifier une pluralité de sous-groupes de caractères série comprend l'identification d'une pluralité de revendications (800-834), et inclut, en outre, les étapes consistant :
a. à identifier chaque revendication (800-834) ;
b. à compter cette au moins une revendication (120, 810, 811) ;
c. à identifier, en outre, chaque revendication comme s'agissant d'une revendication dépendante ou indépendante (924, 926) ; et
d. pour chaque revendication dépendante identifiée, à identifier, en outre, une revendication dont elle dépend (934, 938, 942, 946).

12. Procédé selon la revendication 1, dans lequel le document est codé en format binaire.

13. Procédé selon la revendication 1, dans lequel l'étape consistant à contrôler la pluralité de sous-groupes eu égard à la cohérence de leur relation (100) inclut, en outre, l'étape consistant à rapporter des incohérences en tant qu'erreurs en format binaire.

14. Procédé selon la revendication 1, dans lequel l'étape consistant à contrôler eu égard à la cohérence inclut, en outre, l'étape consistant à reconnaître les abréviations et les alias.

15. Procédé selon la revendication 5, dans lequel lorsqu'une incohérence est détectée pour un caractère de référence sélectionné, un utilisateur du procédé se voit demander de vérifier si le groupe série de caractères provoquant l'incohérence est un nouveau mot clé ou non (370), et si le groupe série de caractères provoquant l'incohérence est vérifié comme s'agissant du nouveau mot clé (370), le fichier de mots clés (1100) est actualisé.

16. Procédé selon la revendication 5, comprenant, en outre, les étapes consistant :
a. à assigner un désignateur de type à chaque caractère de référence, dans lequel le fichier de mots clés est utilisé par l'ordinateur numérique pour différencier les nombres des caractères de référence (60) ;
b. à sélectionner à partir de la mémoire chaque caractère de référence à son tour et à obtenir au moins un mot précédent pour chaque occurrence du caractère de référence sélectionné (370) ;
c. à identifier un premier mot précédent en tant qu'élément du caractère de référence sélectionné et à répéter les étapes b et c jusqu'à ce que toutes les occurrences de tous les caractères de référence aient été obtenues (390, 400, 410) ;
d. à sélectionner à partir de la mémoire chaque caractère de référence à son tour et à compter tous les éléments identifiés (420) pour chaque caractère de référence sélectionné (380) ; et
e. à exécuter un ensemble de pas de processus par ordinateur pour comparer tous les éléments identifiés les uns avec les autres pour chaque caractère de référence sélectionné afin de déterminer une cohérence d'usage (90).

17. Procédé selon la revendication 16, comprenant, en outre, l'étape consistant à rapporter cet au moins un élément identifié qui n'est pas utilisé de façon cohérente en relation avec tous les éléments identifiés pour un caractère de référence sélectionné (100).

18. Procédé selon la revendication 16, comprenant, en outre, l'étape consistant à contrôler eu égard à la correspondance des mots les éléments identifiés qui ne sont pas proches d'un caractère de référence (110).

19. Procédé selon la revendication 16, comprenant, en outre, l'étape consistant à détecter une erreur pour un caractère de référence sélectionné, dans lequel lorsque chaque erreur est détectée, un utilisateur se voit demander de vérifier si une erreur indiquée est un mot clé ou non (20), et si l'erreur indiquée est vérifiée comme s'agissant d'un mot clé (20), le fichier de mots clés (1100) est actualisé.

20. Procédé selon la revendication 7, dans lequel l'un de ladite pluralité de sous-groupes de caractères comprend une section de brève description des dessins, dans lequel au moins un dessin est référencé par au moins une référence de figure, le procédé comprenant les étapes consistant :
a. à situer la section de brève description des dessins (1104) ;
b. à lire cette au moins une référence de figure, dans lequel chaque référence de figure inclut au moins un numéro de figure et au moins une description de figure dans la section de brève description des dessins (1106, 1108) ;
c. à lire la description de brevet à l'exclusion de la section de brève description des dessins pour les numéros de figures de description et les descriptions de figures de description (1112-1116) ; et
d. à contrôler une cohérence d'usage des numéros de figures et des descriptions de figures de la description par rapport à cet au moins un numéro de figure et à cette au moins une description de figure de la section de brève description des dessins (1118).

21. Procédé selon la revendication 1, dans lequel ladite étape consistant à identifier une pluralité de sous-groupes de caractères inclut les étapes consistant à identifier une pluralité de revendications, chaque revendication comprenant une pluralité de mots, le procédé incluant, en outre, les étapes consistant :
a. à situer une revendication de tête avec un numéro de revendication de tête (902-914) ;
b. à fixer un comptage de revendication à un lorsque la revendication de tête est obtenue (922, 972) ;
c. a contrôler si les mots suivant le numéro de revendication de tête sont cohérents ou non avec la forme du projet de revendication (974-990) ;
d. à contrôler une revendication suivante portant un numéro de revendication suivant (910) ;
e. à incrémenter un comptage de revendication si la revendication suivante est obtenue (912) ;
f. à vérifier si les mots suivant le numéro de revendication suivant sont cohérents ou non avec la forme du projet de revendication (974-990) ; et
g. à répéter les étapes d à f jusqu'à ce que toutes les revendications aient été comptées.

22. Procédé selon la revendication 21, comprenant, en outre, l'étape consistant à rapporter les numéros de revendications qui ne suivent pas une séquence prédéterminée (914).

23. Procédé selon la revendication 21, dans lequel l'étape consistant à situer une revendication de tête comprend, en outre, l'étape consistant à obtenir la position de la revendication de tête par recherche du langage de revendication (804).

24. Procédé selon la revendication 1, dans lequel ladite étape consistant à identifier une pluralité de sous-groupes de caractères inclut les étapes consistant à identifier une pluralité de revendications successives, chaque revendication comprenant une pluralité de mots, l'étape consistant à contrôler la pluralité de sous-groupes, **eu égard** à la cohérence de leur relation, comprend le contrôle sur une base d'antécédent dans lesdites revendications au travers des étapes consistant :
a. à rechercher un élément de revendication dans cette au moins une revendication (810) ;
b. à déterminer si cet élément de revendication est un antécédent de revendication ou non et si cet élément de revendication est un antécédent de revendication à ajouter l'antécédent de revendication à une liste d'antécédents (820, 826) ;
c. à déterminer si l'élément de revendication nécessite un antécédent de revendication (820), et si l'élément de revendication nécessite un antécédent de revendication, alors, à contrôler la liste d'antécédents eu égard à l'élément de revendication (822-834) ; et
d. à répéter les étapes b et c jusqu'à ce que tous les éléments de revendication aient été contrôlés.

25. Procédé selon la revendication 24, comprenant, en outre, l'étape consistant à contrôler si un élément de revendication devant être ajouté à la liste d'antécédents se trouve déjà ou non dans la liste des antécédents (822) et si l'élément de revendication se trouve déjà dans la liste d'antécédents, à rapporter une erreur (830).

26. Procédé selon la revendication 24, dans lequel cette au moins une revendication est une revendication dépendante et cette revendication dépendante a une liste d'antécédents pour des éléments de revendication de la revendication dépendante, dans lequel le procédé comprend, en outre, l'étape consistant à contrôler la liste des antécédents eu égard aux éléments de revendication de la revendication dépendante (824-832).

27. Procédé selon la revendication 24, comprenant, en outre, l'étape consistant à rapporter une erreur si un antécédent n'est pas obtenu dans la liste d'antécédents (834).

28. Procédé selon la revendication 24, dans lequel la liste des antécédents comprend une liste chaînée.

29. Procédé selon la revendication 24, incluant, en outre, l'étape consistant à rapporter les antécédents d'éléments de revendication non référencés par les autres éléments de revendication.

30. Procédé selon la revendication 1, dans lequel ladite étape consistant à identifier une pluralité de sous-groupes de caractères inclut les étapes consistant à identifier une pluralité de revendications successives, chaque revendication comprenant une pluralité de mots, l'étape consistant à contrôler la cohérence de leur relation comprenant, en outre, les étapes consistant :
a. à charger une première revendication en tant que revendication en cours (922) ;
b. à lire la revendication en cours afin d'obtenir des références à des revendications (924) ;
c. s'il n'existe pas de référence à des revendications dans la revendication en cours, alors, à désigner la revendication en cours comme s'agissant d'une revendication indépendante (926) ;
d. s'il existe des références à des revendications dans la revendication en cours, alors, à déterminer si la revendication en cours se réfère à elle-même ou non (934) ;
e. s'il existe des références à des revendications dans la revendication en cours, alors, à déterminer si la revendication en cours se réfère ou non à une revendication non existante (938) ;
f. s'il existe des références à des revendications dans la revendication en cours, alors, à déterminer si la revendication en cours se réfère ou non à une revendication portant un numéro plus élevé (942) ; et
g. à charger une revendication suivante en tant que revendication en cours (928-930) et à répéter de façon logique les étapes b à g.

31. Procédé selon la revendication 30, incluant, en outre, l'étape consistant à rapporter une erreur si la revendication en cours se réfère à elle-même (936).

32. Procédé selon la revendication 30, incluant, en outre, l'étape consistant à rapporter une erreur si la revendication en cours se réfère à une revendication inexistante (940).

33. Procédé selon la revendication 30, incluant, en outre, l'étape consistant à rapporter une erreur si la revendication en cours se réfère à une revendication portant un numéro plus élevé (944).

34. Procédé selon la revendication 30, incluant, en outre, l'étape consistant à rapporter une structure de dépendance de toutes les revendications (932).

35. Procédé selon la revendication 24, dans lequel l'étape consistant à contrôler la liste des antécédents (822-834) eu égard à l'élément de revendication comprend, en outre, les étapes consistant :
a. à contrôler l'élément de revendication mot par mot par rapport à chaque antécédent de la liste des antécédents (822, 824, 832) ;
b. à déterminer si un quelconque antécédent de la liste des antécédents ne correspond pas à l'élément de revendication (822, 824, 832).

36. Procédé selon la revendication 24, dans lequel cette au moins une revendication comprend une pluralité de mots en commençant par un premier mot, et dans lequel l'étape consistant à obtenir un élément de revendication comprend, en outre, les étapes consistant :
a. à charger le premier mot de cette au moins une revendication en tant que mot en cours (972) ;
b. à contrôler si le mot en cours est un mot de déclenchement ou non (974) ;
c. si le mot en cours n'est pas un mot de déclenchement, alors, à charger un mot suivant dans cette au moins une revendication en tant que mot en cours et à répéter l'étape b (986) ;
d. à lire la suite depuis le mot de déclenchement jusqu'à un mot de revendication prédéterminé afin de déterminer un élément de revendication (976) ;
e. si un mot de revendication prédéterminé n'est pas obtenu, alors à lire la suite jusqu'à la fin de cette au moins une revendication afin de déterminer un élément de revendication (978) ;
f. si aucun mot de revendication ou fin de cette au moins une revendication n'est obtenu, alors, à rapporter une erreur (980) ;
g. à charger le mot suivant dans cette au moins une revendication en tant que mot en cours (986) ; et
h. à répéter les étapes b à g si le mot en cours n'est pas nul (988).

37. Procédé selon la revendication 1, dans lequel l'étape consistant à identifier une pluralité de sous-groupes de caractères série qui se rapportent les uns aux autres inclut l'obtention des éléments de revendication (810A) dans un document de brevet ayant une section des revendications, dans lequel la section des revendications commence à un premier mot de la section des revendications et la section des revendications inclut au moins un mot de déclenchement prédéterminé, et comprend les étapes consistant :
a. à charger le premier mot de la section des revendications en tant que mot en cours (972) ;
b. à contrôler si le mot en cours est un mot de déclenchement ou non (974) ;
c. si le mot en cours n'est pas un mot de déclenchement, alors, à charger un mot suivant dans la section des revendications en tant que mot en cours (986) et à répéter l'étape b ;
d. à lire la suite depuis le mot de déclenchement jusqu'à un mot de revendication prédéterminé afin de déterminer un élément de revendication (976) ;
e. si un mot de revendication prédéterminé n'est pas obtenu, alors, à lire la suite jusqu'à la fin de la section des revendications afin de déterminer un élément de revendication (978) ;
f. si aucun mot de revendication ou fin de la section des revendications n'est obtenu, alors, à rapporter une erreur (980) ;
g. à charger le mot suivant dans la section des revendications en tant que mot en cours (986) ; et
h. à répéter les étapes b à g si le mot en cours n'est pas nul (988).

38. Procédé selon la revendication 37, dans lequel cet au moins un mot de déclenchement prédéterminé est sélectionné à partir du groupe composé de : un, moyens pour, au moins un, le, ledit.

39. Procédé selon la revendication 38, dans lequel l'étape consistant à identifier tous les éléments de revendications pour chaque revendication (976-978) inclut, en outre, l'étape consistant à regarder en arrière à une chaîne de mots précédant le mot de déclenchement "moyens pour" pour cette revendication et si un mot précédant la chaîne de mots est nul ou bien est un nombre ou bien est un mot de revendication, alors, à allouer la chaîne de mots en tant qu'antécédent de revendication (982).

40. Procédé selon la revendication 37, dans lequel une pluralité d'antécédents de revendications est générée pour chaque élément de revendication, et dans lequel la pluralité des antécédents de revendications est synonyme de cet élément de revendication (984).

41. Procédé selon la revendication 37, dans lequel le mot de revendication prédéterminé est sélectionné à partir du groupe composé de : "comprenant", "contenant", "constitué de", ", ", ".", ";", "(", "comprend", "inclut", "ayant", "a", "pour", "est", "dans lequel", "en outre", "sont", "conçu", "qui", "et", "tel", "dans", "le long", "autour", "au-dessous", "au-dessus", "par dessus", "en dessous", "en deçà", "après", "avant", "moyens" et "constitué de".

42. Procédé selon la revendication 37, dans lequel l'étape consistant à identifier tous les éléments de revendications pour chaque revendication (976-978) inclut, en outre, les étapes consistant :
a. dans le cas où aucun délimiteur d'antécédent n'est obtenu et qu'aucune phrase de type "moyens pour" n'est obtenue, à chercher une phrase du type "au moins un" en contrôlant la chaîne de mots en cours par rapport à "à" et à chercher "au moins" et "un" suivant "à" ;
b. à lire la suite à partir de "au moins un" ou de "au moins" ;
c. à obtenir un mot "moyens", puis à chercher un mot "pour" pour une chaîne de mots suivant immédiatement "moyens" ;
d. si "moyens pour" est obtenu, alors à lire "moyens pour" jusqu'à ce qu'un mot en cours lors de la recherche dans la suite soit nul ou bien un nombre ou bien un mot de revendication ; et
e. à allouer la chaîne de mots de la suite en tant qu'antécédent (982).

43. Procédé selon la revendication 5, dans lequel les mots clés comprennent les mots sélectionnés à partir du groupe composé de : 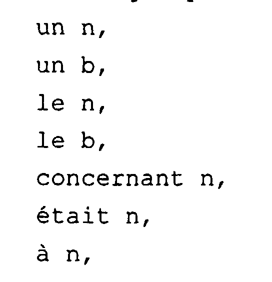 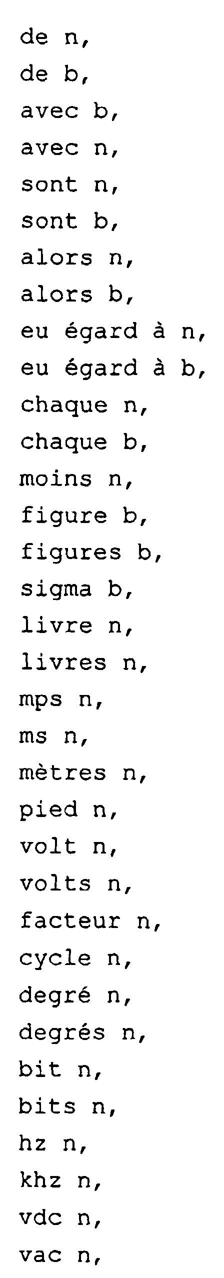 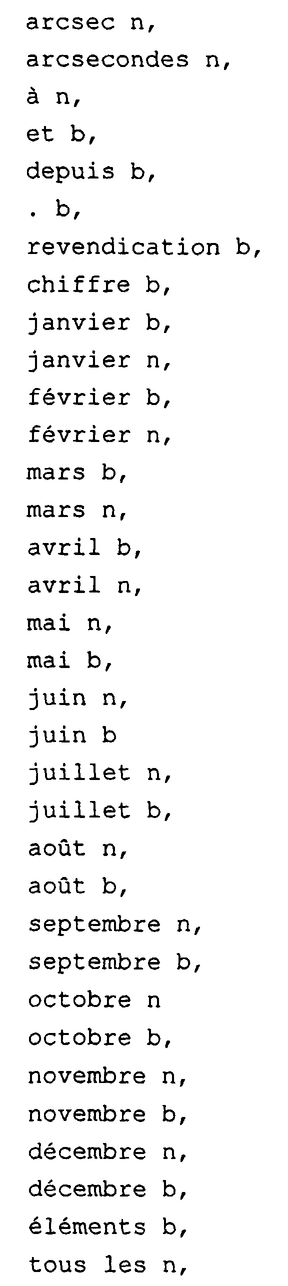 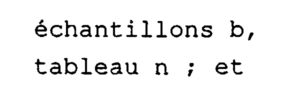 dans lequel un caractère "n" suivant un mot clé sélectionné représente "suivant" (520) et indique qu'un nombre peut suivre le mot clé sélectionné, et un caractère "b" suivant le mot clé sélectionné représente "arrière" (510) et indique qu'un nombre peut précéder le mot clé sélectionné.
